(19) Europäisches Patentamt / European Patent Office / Office européen des brevets

(11) EP 3 993 626 B1

(12) **EUROPÄISCHE PATENTSCHRIFT**

(45) Veröffentlichungstag und Bekanntmachung des Hinweises auf die Patenterteilung:
**06.11.2024 Patentblatt 2024/45**

(21) Anmeldenummer: **20734395.5**

(22) Anmeldetag: **26.06.2020**

(51) Internationale Patentklassifikation (IPC):
***A01N 43/80*** *(2006.01)* ***A01N 43/40*** *(2006.01)*
***A01N 57/20*** *(2006.01)* ***A01N 43/82*** *(2006.01)*
***A01N 47/36*** *(2006.01)* ***A01N 37/18*** *(2006.01)*
***A01N 47/38*** *(2006.01)* ***A01N 37/40*** *(2006.01)*
***A01N 43/56*** *(2006.01)* ***A01N 43/66*** *(2006.01)*
***A01P 13/02*** *(2006.01)*

(52) Gemeinsame Patentklassifikation (CPC):
(C-Sets verfügbar)
**A01N 43/80; A01P 13/02** (Forts.)

(86) Internationale Anmeldenummer:
**PCT/EP2020/068003**

(87) Internationale Veröffentlichungsnummer:
**WO 2021/001273 (07.01.2021 Gazette 2021/01)**

(54) **HERBIZIDE ZUSAMMENSETZUNGEN**

HERBICIDAL COMPOSITIONS

COMPOSITIONS D'HERBICIDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.07.2019 EP 19184436**

(43) Veröffentlichungstag der Anmeldung:
**11.05.2022 Patentblatt 2022/19**

(60) Teilanmeldung:
**24164498.8 / 4 378 314**

(73) Patentinhaber: **Bayer Aktiengesellschaft**
**51373 Leverkusen (DE)**

(72) Erfinder:
- **LORENTZ, Lothar**
  **51545 Waldbröl (DE)**
- **HAAF, Klaus Bernhard**
  **65779 Kelkheim (DE)**
- **TRABOLD, Klaus**
  **69123 Heidelberg (DE)**
- **MENNE, Hubert**
  **55252 Mainz-Kastel (DE)**
- **GATZWEILER, Elmar**
  **61231 Bad Nauheim (DE)**
- **ROSINGER, Christopher Hugh**
  **65719 Hofheim am Taunus (DE)**

(74) Vertreter: **BIP Patents**
**c/o Bayer Intellectual Property GmbH**
**Alfred-Nobel-Straße 50**
**40789 Monheim am Rhein (DE)**

(56) Entgegenhaltungen:
**WO-A1-2012/130798 WO-A1-2019/034602**
**WO-A1-2019/145245**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 993 626 B1

(52) Gemeinsame Patentklassifikation (CPC): (Forts.)

C-Sets
**A01N 43/80, A01N 37/18;**
**A01N 43/80, A01N 37/40;**
**A01N 43/80, A01N 43/40;**
**A01N 43/80, A01N 43/56;**
**A01N 43/80, A01N 43/66;**
**A01N 43/80, A01N 43/82;**
**A01N 43/80, A01N 47/36;**
**A01N 43/80, A01N 47/38;**
**A01N 43/80, A01N 57/20**

## Beschreibung

Die Erfindung liegt auf dem technischen Gebiet der Pflanzenschutzmittel, die gegen unerwünschten Pflanzenwuchs in Nichtkulturland, zur Saatvorbereitung oder in Pflanzenkulturen eingesetzt werden können und als Herbizidwirkstoffe eine Kombination von mindestens zwei Herbiziden enthalten, wobei die Zusammensetzungen herbizid wirksame Verbindungen (A) und (B) enthält, worin (A) A1 oder deren agrochemisch verträglichen Salze [Herbizide (A) bzw. Komponente (A)] und (B) ein oder mehrere Herbizide (Komponente B) bedeutet.

Verbindungen aus der Strukturklasse der 3-Phenylisoxazolin-5-carboxamide sind als Herbizide bekannt (siehe z. B. WO 2012/130798 A1, WO 2019/034602 A1). Die Verbindungen sind gegen ein breites Spektrum von Schadpflanzen im Vorauflauf wie auch im Nachauflaufapplikationsverfahren wirksam, wobei ein nichtselektiver Einsatz zur Bekämpfung von unerwünschtem Pflanzenwuchs oder ein selektiver Einsatz in Pflanzenkulturen möglich ist.

Die Wirksamkeit dieser Herbizide gegen Schadpflanzen liegt auf einem hohen Niveau, hängt jedoch im Allgemeinen von der Aufwandmenge, der jeweiligen Zubereitungsform, dem Schadpflanzenspektrum, den jeweils zu bekämpfenden Schadpflanzen, den Klima- und Bodenverhältnissen, etc. ab. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen, die bei längerer Anwendung der Herbizide oder geographisch begrenzt auftreten können. Wirkungsverluste bei einzelnen Pflanzen lassen sich nur bedingt durch höhere Aufwandmengen der Herbizide ausgleichen, z. B. weil damit häufig die Selektivität der Herbizide verschlechtert wird oder eine Wirkungsverbesserung auch bei höherer Aufwandmenge nicht eintritt. Generell besteht Bedarf an Methoden, die Herbizidwirkung mit geringerer Aufwandmenge an Wirkstoffen zu erreichen. Eine geringere Aufwandmenge reduziert nicht nur die für die Applikation erforderliche Menge eines Wirkstoffs, sondern reduziert in der Regel auch die Menge an nötigen Formulierungshilfsmitteln. Beides verringert den wirtschaftlichen Aufwand und verbessert die ökologische Verträglichkeit der Herbizidbehandlung.

Eine Möglichkeit zur Verbesserung des Anwendungsprofils eines Herbizids kann in der Kombination des Wirkstoffs mit einem oder mehreren anderen Wirkstoffen bestehen, welche die gewünschten zusätzlichen Eigenschaften beisteuern. Allerdings treten bei der kombinierten Anwendung mehrerer Wirkstoffe nicht selten Phänomene der physikalischen und biologischen Unverträglichkeit auf, z. B. mangelnde Stabilität in einer Coformulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst unerwartet synergistisch verstärkter Wirkung, welche eine Reduzierung der Aufwandmenge im Vergleich zur Einzelapplikation der zu kombinierenden Wirkstoffe erlaubt.

Die Aufgabe der vorliegenden Erfindung besteht in der Bereitstellung alternativer oder vorteilhafter herbizider Zusammensetzungen, welche ein gutes biologisches Anwendungsprofil und möglichst mehrere der oben genannten gewünschten günstigen Eigenschaften aufweisen.

Überraschenderweise wurde nun gefunden, dass diese Aufgabe durch Verwendung einer Zusammensetzung enthaltend herbizid wirksame Verbindungen (A) und (B) gelöst werden kann, wobei (A) A1 oder deren agrochemisch verträglichen Salze [Komponente (A)] bedeutet und (B) ein oder mehrere Herbizide [Komponente (B)] bedeutet. Die erfindungsgemäßen Zusammensetzungen wirken in besonders günstiger Weise zusammen, z.B. wenn sie zur Bekämpfung von unerwünschtem Pflanzenwuchs in Kulturpflanzen wie Weizen (Hart- und Weichweizen), Mais, Soja, Zuckerrübe, Zuckerrohr, Baumwolle, Reis, Bohnen (wie beispielsweise Buschbohne und Pferdebohne), Flachs, Gerste, Hafer, Roggen, Triticale, Kartoffel und Hirse (Sorghum), Nichtkulturland Weideland und Grün-/Rasenflächen und Plantagenkulturen eingesetzt werden.

Gegenstand der vorliegenden Erfindung sind somit Zusammensetzungen enthaltend herbizid wirksame Verbindungen (A) und (B), wobei (A) für A1 steht, oder ein agrochemisch verträgliches Salz dieser Verbindung, wobei die Verbindung A1 wie folgt definiert ist:

A1 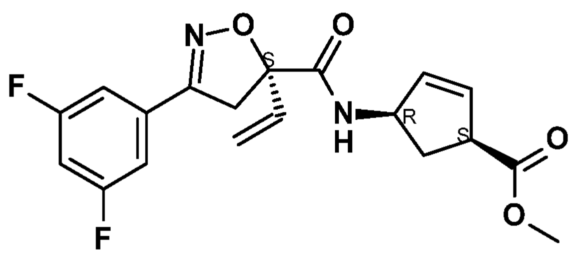

und

(B) für

eine oder mehrere Komponenten (B) ausgewählt aus

(B2.18) Diflufenican,
(B2.28) Flufenacet,
(B2.31) Foramsulfuron,
(B2.37) Mesosulfuron,
(B2.58) Propyzamide,
(B2.68) Thiencarbazone,
(B3.1) Bromoxynil,
(B4.22) Pyrasulfotole,
(B5.31) Halauxifen,
(B7.4) Glufosinate,
(B7.5) Glyphosate,
(B11.6) Indaziflam steht.

Für Wirkstoffe, die in verschiedenen Formen existieren, ist in der obigen Auflistung jeweils der Name der Neutralverbindung angegeben. Im Folgenden wird immer nur die Neutralverbindung genannt und umfasst damit sämtliche existierenden Formen wie aufgelistet, es sei denn, eine spezifische Form des Wirkstoffs ist in einem bestimmten Zusammenhang relevant, wie z.B. in nachstehenden Tabellenbeispiele für die biologische Wirksamkeit.

Die erfindungsgemäßen Zusammensetzungen können weitere Komponenten enthalten, z. B. andere Wirkstoffe gegen Schadorganismen wie Schadpflanzen, pflanzenschädliche Tiere oder pflanzenschädliche Pilze, insbesondere dabei Wirkstoffe aus der Gruppe der Herbizide, Fungizide, Insektizide, Akarizide, Nematizide und Mitizide und verwandte Stoffe, oder auch Pflanzenschutzmittelwirkstoffe anderer Art (z. B. Resistenzinduktoren), Pflanzenwachstumsregulatoren und/oder im Pflanzenschutz übliche Zusatzstoffe und/oder Formulierungshilfsmittel. Die Komponenten können dabei gemeinsam formuliert (Fertigformulierung) und angewendet werden oder sie können getrennt formuliert und gemeinsam angewendet werden, z. B. im Tank-Mix oder in sequentieller Applikation.

Die als Komponente (A) enthaltenen einzelnen herbiziden Wirkstoffe der allgemeinen Formel (I) werden im Folgenden auch als Verbindungen (A), Wirkstoffe (A), Komponenten (A) oder Herbizide (A) bezeichnet. Entsprechend werden die als Komponente (B) enthaltenen einzelnen herbiziden Wirkstoffe im Folgenden auch als Verbindungen (B), Wirkstoffe (B), Komponenten (B) oder Herbizide (B) bezeichnet.

Als vorteilhafte Eigenschaft der erfindungsgemäßen Kombination von Herbiziden (A) und (B) zeigt sich, dass Wirkstoffe (A) und (B) miteinander kompatibel sind, d. h. sie lassen sich gemeinsam anwenden, ohne dass wesentliche chemische Unverträglichkeiten der Wirkstoffe (A) und/oder (B) auftreten, die zu einer Zersetzung eines oder mehrerer Wirkstoffe führen. Damit wird eine Reduzierung des Wirkstoffgehalts in Formulierungen oder Spritzbrühen vermieden. Die günstige Kompatibilität erstreckt sich auch auf die biologischen Eigenschaften der Wirkstoffe bei der kombinierten Anwendung. So werden antagonistische Effekte bei der Kontrolle von Schadpflanzen mit den erfindungsgemäßen Wirkstoff-Kombinationen in der Regel nicht beobachtet. Damit sind die Wirkstoffe (A) und (B) besonders geeignet, gemeinsam oder zusätzlich mit weiteren Pflanzenschutzmittelwirkstoffen oder Agrochemikalien angewendet zu werden. Die ermöglichte kombinierte Anwendung erlaubt die Nutzung vorteilhafter Effekte, wie beispielsweise die Ausweitung des Spektrums der zu kontrollierenden oder zu bekämpfenden Schadpflanzen bei einer Anwendung, die Reduzierung der Aufwandmenge der einzelnen Herbizide (A) bzw. (B) im Vergleich zur jeweiligen Aufwandmenge des betreffenden Herbizids bei der Einzelapplikation. Damit kann das Abbauverhalten der Wirkstoffe beeinflusst und günstigere Bedingungen für den Nachbau von Kulturpflanzen erreicht werden. Ein weiterer Vorteil ist darin zu sehen, dass die Entstehung von Resistenzen der Schadpflanzen gegen die Wirkstoffe durch Kombination von Wirkstoffen mit unterschiedlichem Wirkungsmechanismus oft wesentlich verringert werden oder vermieden werden kann.

Insbesondere treten überraschenderweise bei der kombinierten Anwendung der Wirkstoffe (A) und (B) bei einer größeren Zahl wirtschaftlich wichtiger Schadpflanzen überadditive (= synergistische) Effekte auf. Dabei ist die Wirkung in der Kombination stärker als die zu erwartende Summe der Wirkungen der eingesetzten Einzelherbizide. Die synergistischen Effekte erlauben eine weitere Reduzierung der Aufwandmenge, die Bekämpfung eines breiteren Spektrums von Unkräutern und Ungräsern, einen schnelleren Einsatz der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Teilweise wird durch den Einsatz der Mittel auch die Menge an schädlichen Inhaltsstoffen, wie Stickstoff oder Ölsäure, und deren Eintrag in den Boden reduziert.

Die genannten Eigenschaften und Vorteile sind in der praktischen Unkrautbekämpfung gewünscht, um landwirtschaftliche Kulturen von unerwünschten Konkurrenzpflanzen freizuhalten und damit die Erträge qualitativ und quantitativ zu sichern und/oder zu erhöhen. Der technische Standard wird durch die neuen Kombinationen hinsichtlich der beschriebenen Eigenschaften deutlich übertroffen.

Die synergistischen Wirkungen werden bei gemeinsamer Ausbringung der Wirkstoffe (A) und (B) beobachtet, können jedoch auch häufig bei zeitlich versetzter Anwendung (Splitting) auftreten. Möglich ist auch die Anwendung der Herbizide (A) bzw. (B) oder der herbiziden Zusammensetzung (A) und (B) in mehreren Portionen (Sequenzanwendung).

Beispielsweise kann nach einer oder mehreren Anwendungen im Vorauflauf eine Nachauflauf-Applikation erfolgen, oder nach einer frühen Nachauflaufanwendung kann eine Applikationen im mittleren oder späten Nachauflauf erfolgen. Bevorzugt ist dabei die simultane oder zeitnahe Anwendung der Wirkstoffe der jeweiligen Kombination, gegebenenfalls in mehreren Portionen. Aber auch die zeitversetzte Anwendung der Einzelwirkstoffe einer Kombination ist möglich und kann im Einzelfall vorteilhaft sein. In das System der Anwendung können auch andere Pflanzenschutzmittel, wie beispielsweise die erwähnten anderen Wirkstoffe (andere Herbizide, Fungizide, Insektizide, Akarizide etc.) und/oder verschiedene Hilfsstoffe, Adjuvantien und/oder Düngergaben, integriert werden.

Unter Anwendung im Vorauflauf- oder Nachauflaufverfahren ist je nach dem Zusammenhang, in dem die Bezeichnungen verwendet werden, die Anwendung der Wirkstoffe vor dem bzw. nach dem obererdig sichtbaren Erscheinen der Schadpflanzen zu verstehen oder die Anwendung der Wirkstoffe gegen die Schadpflanzen vor Auflauf der Kulturpflanzen bzw. nach Auflauf der Kulturpflanzen zu verstehen.

A1 ist durch die chemische Formel der Hauptkomponente bezeichnet, wobei diese Komponente in einer chemischen Reinheit von vorzugsweise mindestens 95 Gewichtsprozent der Verbindung vorliegt. Naturgemäß können die Verbindungen auch mit niedrigeren Reinheiten eingesetzt werden. Insbesondere wenn Nebenkomponenten der Verbindungen überwiegend oder ganz aus Stereoisomeren der Verbindung (A) bestehen, werden bei der Anwendung Wirksamkeiten erreicht. Bei A1 ist die stereochemische Orientierung an den C-Atomen definiert, es handelt es sich um die Hauptkomponente der Verbindung: um ein Stereoisomer oder Stereoisomerengemisch, das an dem bezeichneten C-Atom die R- oder S-Konfiguration aufweist.

Bevorzugt sind dabei auch die jeweils aufgeführten Verbindungen in einer stereochemischen Reinheit von 60 bis 100 %, vorzugsweise 70-100 %, insbesondere 80 bis 100%.

Bevorzugt sind auch die aufgeführten Gemische von stereoisomeren Verbindungen (A).

Die Verbindung der Formel (A1) ist aus der nicht-vorveröffentlichten Anmeldung mit dem Aktenzeichen WO 2019/145245 A1 bekannt und kann nach den dort beschriebenen Verfahren hergestellt werden.

Die Aufwandmengen des Herbizids (A) liegen im Bereich von 0,01 bis 2000 g Aktivsubstanz pro Hektar (im folgenden g a.i./ha), vorzugsweise 0,02 bis 1000 g a.i./ha, insbesondere 0,5 bis 750 g a.i./ha). In den erfindungsgemäßen Kombinationen werden im Rahmen der genannten Aufwandmengen im Vergleich zur Einzelapplikation meist niedrigere Aufwandmengen des jeweiligen Wirkstoffs benötigt, vorzugsweise 0,01 bis 1000 g a.i./ha, insbesondere 0,02 bis 500 g a.i./ha, und am meisten bevorzugt 5 bis 250 g a.i./ha.

Weiterhin können die erfindungsgemäßen Kombinationen zusammen mit anderen Wirkstoffen wie die erwähnten Wirkstoffe (Herbizide, Fungizide, Insektizide, Akarizide etc.) und/oder Pflanzenwachstumsregulatoren oder Hilfstoffe aus der Gruppe der im Pflanzenschutz üblichen Zusatzstoffe, wie Adjuvantien und Formulierungshilfsmittel, eingesetzt werden. Die Kombination der Pflanzenschutzmittelwirkstoffe, welche die Wirkstoffe (A) und (B) und gegebenenfalls weitere Wirkstoffe enthalten, werden hier kurz als "Herbizid-Kombination" bezeichnet. Deren Anwendungsformen wie Formulierungen oder Tankmischungen stellen herbizide Mittel (Zusammensetzungen) dar.

Gegenstand der Erfindung sind deshalb auch die herbiziden Mittel, welche die erfindungsgemäßen Wirkstoffkombinationen mit im Pflanzenschutz üblichen Zusatzstoffen, wie Adjuvantien und Formulierungshilfsmitteln, und gegebenenfalls weiteren Pflanzenschutzmittelwirkstoffen enthalten.

Gegenstand der Erfindung ist auch die Verwendung der bzw. das Anwendungsverfahren unter Verwendung der erfindungsgemäßen Wirkstoffkombinationen als Herbizide und Pflanzenwachstumsregulatoren, vorzugsweise als Herbizide und Pflanzenwachstumsregulatoren mit einem synergistisch wirksamen Gehalt an der jeweils enthaltenen Wirkstoffkombination.

Die Aufwandmengen der Herbizide (B) sind im Prinzip bekannt und liegen in der Regel im Bereich von 0,01 bis 4000 g a.i./ha, vorzugsweise im Bereich von 0,02 bis 2000 g a.i./ha, insbesondere 1 bis 2000 g a.i./ha.

In den erfindungsgemäßen Mischungen werden im Rahmen der genannten Aufwandmengen im Vergleich zur Einzelapplikation in der Regel niedrigere Aufwandmengen des jeweiligen Wirkstoffs benötigt.

Für die Wirkstoffe aus der Gruppe (B2) ist die Aufwandmenge vorzugsweise im Bereich von 1 bis 4000 g a.i./ha, insbesondere im Bereich von 1 bis 2000 g a.i./ha, und am meisten bevorzugt im Bereich von 1 bis 400 g a.i./ha.

Für den Wirkstoff aus der Gruppe (B3) ist die Aufwandmenge vorzugsweise im Bereich von 10 bis 1000 g a.i. /ha, insbesondere im Bereich von 10 bis 500 g a.i./ha, und am meisten bevorzugt im Bereich von 10 bis 300 g a.i./ha.

Für den Wirkstoff aus der Gruppe (B4) ist die Aufwandmenge vorzugsweise im Bereich von 1 bis 700 g a.i. /ha, insbesondere im Bereich von 1 bis 400 g a.i./ha, und am meisten bevorzugt im Bereich von 1 bis 200 g a.i./ha.

Für den Wirkstoff aus der Gruppe (B5), ausgenommen Pelargonsäure (B5.38), ist die Aufwandmenge vorzugsweise im Bereich von 1 bis 2400 g a.i. /ha, insbesondere im Bereich von 1 bis 1200 g a.i./ha, und am meisten bevorzugt im Bereich von 1 bis 400 g a.i./ha. Für Pelargonsäure (B.5.38) ist die Aufwandmenge vorzugsweise 1 bis 100.000 g a.i/ha, weiter bevorzugt 1 bis 40.000 g a.i./ha und insbesondere im Bereich von 1 bis 30.000 g a.i./ha.

Für den Wirkstoff aus der Gruppe (B7) ist die Aufwandmenge vorzugsweise im Bereich von 20 bis 3500 g a.i. /ha, insbesondere im Bereich von 20 bis 2500 g a.i./ha, und am meisten bevorzugt im Bereich von 20 bis 2000 g a.i./ha.

Für den Wirkstoff aus der Gruppe (B11) ist die Aufwandmenge vorzugsweise im Bereich von 25 bis 3000 g a.i.

/ha, insbesondere im Bereich von 25 bis 2500 g a.i./ha, und am meisten bevorzugt im Bereich von 25 bis 2000 g a.i./ha.

Die Mengenverhältnisse (A):(B) bezogen auf das Gewicht liegen in Abhängigkeit von den wirksamen Aufwandmengen in der Regel im Bereich von 1:100000 bis 2000:1, vorzugsweise 1:40000 bis 750:1, insbesondere im Bereich von 1:15000 bis 500:1 und noch weiter bevorzugt im Bereich von 1:300 bis 400:1.

Für die Wirkstoffe aus den Gruppen (B2), (B3), (B4), (B5), (B7) und (B11)sind die bevorzugten Gewichtsverhältnisse (A):(B) wie folgt:

(A):(B2) vorzugsweise im Bereich von 400:1 bis 1:400, insbesondere 200:1 bis 1:200;

(A):(B3) vorzugsweise im Bereich von 30:1 bis 1:30, insbesondere 15:1 bis 1:15;

(A):(B4) vorzugsweise im Bereich von 300:1 bis 1:300, insbesondere 150:1 bis 1:150;

(A):(B5) vorzugsweise im Bereich von 400:1 bis 1:300 , insbesondere 300:1 bis 1:150;

(A):(B7) vorzugsweise im Bereich von 10:1 bis 1:200, insbesondere 1:1 bis 1:100;

(A):(B11) vorzugsweise im Bereich von 30:1 bis 1:300, insbesondere 15:1 bis 1:150.

Die erfindungsgemäßen herbiziden Zusammensetzungen können auch mit weiteren Herbiziden und Pflanzenwachstumsregulatoren kombiniert werden, um beispielsweise das Wirkungsspektrum zu ergänzen. Als Kombinationspartner für die erfindungsgemäßen Verbindungen in Mischungsformulierungen oder im Tank-Mix sind beispielsweise bekannte Wirkstoffe, die auf einer Inhibition von beispielsweise Acetolactat-Synthase, Acetyl-CoA-Carboxylase, Cellulose-Synthase, Enolpyruvylshikimat-3-phosphat-Synthase, Glutamin-Synthetase, p-Hydroxyphenylpyruvat-Dioxygenase, Phytoendesaturase, Photosystem I, Photosystem II, Protoporphyrinogen-Oxidase beruhen, einsetzbar, wie sie z.B. aus Weed Research 26 (1986) 441-445 oder "The Pesticide Manual", 14th edition, The British Crop Protection Council and the Royal Soc. of Chemistry, 2006, das korrespondierende "e-Pesticide Manual Version 4 (2006)" und dort zitierter Literatur bekannt sind. Weitere Handelsnamen und "common names" sind im "Compendium of Pesticide Common Names" verzeichnet (abfragbar im Internet unter http://www.alanwood.net/pesticides).

Als bekannte Herbizide, die mit den erfindungsgemäßen Verbindungen kombiniert werden können, sind z.B. folgende Wirkstoffe zu nennen (Anmerkung: Die Verbindungen sind entweder mit dem "common name" nach der International Organization for Standardization (ISO) oder mit dem chemischen Namen, ggf. zusammen mit einer üblichen Codenummer bezeichnet) und umfassen stets sämtliche Anwendungsformen wie Säuren, Salze, Ester und Isomere wie Stereoisomere und optische Isomere. Dabei sind eine und zum Teil auch mehrere Anwendungsformen genannt:
2,4-D, Acetochlor, Acifluorfen, Acifluorfen-sodium, Aclonifen, Alachlor, Alloxydim, Alloxydimsodium, Ametryn, Amicarbazone, Amidosulfuron, Amitrole, Anilofos, Asulam, Atrazine, Azafenidin, Azimsulfuron, Beflubutamid, Benazolin, Benazolin-ethyl, Benfuresate, Bensulfuron-methyl, Bentazone, Benzfendizone, Benzobicyclon, Benzofenap, Bifenox, Bilanafos, Bispyribac-natrium, Bromacil, Bromobutide, Bromofenoxim, Bromoxynil, Butachlor, Butafenacil, Butenachlor, Butralin, Butroxydim, Butylate, Cafenstrole, Carbetamide, Carfentrazone-ethyl, Chlomethoxyfen, Chloridazon, Chlorimuronethyl, Chlornitrofen, Chlorotoluron, Chlorsulfuron, Cinidon-ethyl, Cinmethylin, Cinosulfuron, Clefoxydim, Clethodim, Clodinafop-propargyl, Clomazone, Clomeprop, Clopyralid, Cloransulammethyl, Cumyluron, Cyanazine, Cyclosulfamuron, Cycloxydim, Cyhalofop-butyl, Desmedipham, Dicamba, Dichlobenil, Dichlorprop, Dichlorprop-P, Diclofop-methyl, Diclosulam, Difenzoquat, Diflufenican, Diflufenzopyr, Dikegulac-sodium, Dimefuron, Dimepiperate, Dimethachlor, Dimethametryn, Dimethenamid, Triaziflam, Diquat-dibromide, Dithiopyr, Diuron, Dymron, EPTC, Esprocarb, Ethalfluralin, Ethametsulfuron-methyl, Ethoxyfen, Ethoxysulfuron, Etobenzanid, Fenoxaprop-ethyl, Fenoxaprop-P-ethyl, Fentrazamide, Flamprop-M-isopropyl, Flamprop-M-methyl, Flazasulfuron, Florasulam, Fluazifop, Fluazifop-butyl, Fluazifop--butyl, Fluazolate, Flucarbazonesodium, Flucetosulfuron, Fluchloralin, Flufenacet, Flufenpyr, Flumetsulam, Flumiclorac-pentyl, Flumioxazin, Fluometuron, Fluorochloridone, Fluoroglycofen-ethyl, Flupoxam, Flupyrsulfuron-methylsodium, Fluridone, Fluroxypyr, Fluroxypyr-butoxypropyl, Fluroxypyr-meptyl, Flurprimidol, Flurtamone, Fluthiacet-methyl, Fomesafen, Foramsulfuron, Glufosinate, Glufosinate-ammonium, Glyphosate, Halosulfuron-methyl, Haloxyfop, Haloxyfop-ethoxyethyl, Haloxyfop-methyl, Haloxyfop-P-methyl, Hexazinone, Imazamethabenz-methyl, Imazamox, Imazapic, Imazapyr, Imazaquin, Imazethapyr, Imazosulfuron, Indanofan, Iodosulfuron-methyl-natrium, Ioxynil, Isoproturon, Isouron, Isoxaben, Isoxachlortole, Isoxaflutole, Ketospiradox, Lactofen, Lenacil, Linuron, MCPA, Mecoprop, Mecoprop-P, Mefenacet, Mesosulfuron-methyl, Mesotrione, Metamifop, Metamitron, Metazachlor, Methabenzthiazuron, Methyldymron, Metobromuron, Metolachlor, Metosulam, Metoxuron, Metribuzin, Metsulfuron-methyl, Molinate, Monolinuron, Naproanilide, Napropamide, Neburon, Nicosulfuron, Norflurazon, Orbencarb, Oryzalin, Oxadiargyl, Oxadiazon, Oxasulfuron, Oxaziclomefone, Oxyfluorfen, Paraquat, Pelargonic acid, Pendimethalin, Pendralin, Pentoxazone, Pethoxamid, Phenmedipham, Picloram, Picolinafen, Pinoxaden, Piperophos, Pretilachlor, Primisulfuron-methyl, Profluazol, Profoxydim, Prometryn, Propachlor, Propanil, Propaquizafop, Propisochlor, Propoxycarbazone-sodium, Propyzamide, Prosulfocarb, Prosulfuron, Pyraclonil, Pyraflufen-ethyl, Pyrazolate, Pyrazosulfuron-ethyl, Pyrazoxyfen, Pyribenzoxim, Pyributicarb, Pyridafol, Pyridate, Pyriftalid, Pyriminobac-methyl, Pyrithiobac-sodium, Quinclorac, Quinmerac, Quinoclamine, Quizalofop-ethyl, Quizalofop-P-ethyl, Quizalofop-P-tefuryl, Rimsulfuron, Sethoxydim, Simazine, Simetryn, S-Metolachlor, Sulcotrione, Sulfentrazone, Sulfometuron-methyl, Sulfosate, Sulfosulfuron, Tebuthiuron, Tepraloxydim, Terbuthylazine, Terbutryn, Thenylchlor, Thiazopyr, Thifensulfuron-methyl, Thiobencarb, Tiocarbazil, Tralkoxydim, Triallate, Triasulfuron, Tribenuron-methyl, Triclopyr, Tridiphane, Trifloxysulfuron, Trifluralin, Triflusulfuron-methyl, Tritosulfuron, WL 110547, d. h. 5-phenoxy-1-[3-(trifluoromethyl)phenyl]-1H-tetrazole; HOK-201, HOK-202, UBH-509; D-489; LS 82-556; KPP-300; NC-324; NC-330; KH-218; DPX-N8189; SC-0774; TH-547, DOWCO-535; DK-8910; V-53482; PP-600; MBH-001; KIH-9201; ET-751; KIH-6127; KIH-2023 and KIH5996..

Wenn die jeweilige Bezeichnung (common name) mehrere Formen des Wirkstoffes umfasst, ist mit der Bezeichnung die kommerziell erhältliche Form bevorzugt definiert.

Jeder der genannten weiteren Wirkstoffe (= Wirkstoffe (C*), (C1*), (C2*) etc.) kann dann vorzugsweise mit einer der Zweierkombinationen gemäß der vorliegenden Erfinung, nach dem Schema (A)+(B)+(C*) oder auch nach dem Schema (A)+(B)+(C1*)+(C2*) etc. kombiniert werden.

Die Mengenangaben sind Aufwandmengen (g a.i./ha = Gramm Aktivsubstanz pro Hektar) und definieren somit auch die Mengenverhältnisse in einer Koformulierung, einem Pre-mix, einem Tank-mix oder einer sequentiellen Applikation der kombinierten Wirkstoffe.

Die Kombinationen können sowohl im Vorauflaufverfahren als auch Nachauflaufverfahren angewendet werden. Dies gilt sowohl für Vor- und Nachauflauf in Bezug auf die Schadpflanzen also auch bei der selektiven Bekämpfung der Schadpflanzen für den Vor- oder Nachauflauf der Kulturpflanzen. Es kommen dabei auch Mischformen in Frage, z. B. beim Nachauflauf der Kulturpflanzen die Bekämpfung der Schadpflanzen in deren Vor- oder Nachauflaufstadium.

Die erfindungsgemäßen Herbizid-Kombinationen können weitere Komponenten enthalten, z. B. andere Wirkstoffe gegen Schadorganismen wie Schadpflanzen, pflanzenschädliche Tiere oder pflanzenschädliche Pilze, insbesondere dabei Wirkstoffe aus der Gruppe Herbizide, Fungizide, Insektizide, Akarizide, Nematizide, Mitizide und verwandte Stoffe.

Fungizid wirksame Verbindungen, die in Kombination mit den erfindungsgemäßen Herbizidkombinationen eingesetzt werden können, sind bevorzugt handelsübliche Wirkstoffe, beispielsweise (analog zu den Herbiziden werden die Verbindungen generell mit ihren Common names bezeichnet, hier in der üblichen englischen Schreibweise):

1) Inhibitoren der Ergosterol-Biosynthese, beispielsweise (1.001) Cyproconazol, (1.002) Difenoconazol, (1.003) Epoxiconazol, (1.004) Fenhexamid, (1.005) Fenpropidin, (1.006) Fenpropimorph, (1.007) Fenpyrazamin, (1.008) Fluquinconazol, (1.009) Flutriafol, (1.010) Imazalil, (1.011) Imazalil Sulfat, (1.012) Ipconazol, (1.013) Metconazol, (1.014) Myclobutanil, (1.015) Paclobutrazol, (1.016) Prochloraz, (1.017) Propiconazol, (1.018) Prothioconazol, (1.019) Pyrisoxazol, (1.020) Spiroxamin, (1.021) Tebuconazol, (1.022) Tetraconazol, (1.023) Triadimenol, (1.024) Tridemorph, (1.025) Triticonazol, (1.026) (1R,2S,5S)-5-(4-Chlorbenzyl)-2-(chlormethyl)-2-methyl-1-(1H-1,2,4-triazol-1-ylmethyl)cyclopentanol, (1.027) (1S,2R,SR)-5-(4-Chlorbenzyl)-2-(chlormethyl)-2-methyl-1-(1H-1,2,4-triazol-1-ylmethyl)cyclopentanol, (1.028) (2R)-2-(1-Chlorcyclopropyl)-4-[(1R)-2,2-dichlorcyclopropyl]-1-(1H-1,2,4-triazol-1-yl)butan-2-ol (1.029) (2R)-2-(1-Chlorcyclopropyl)-4-[(1S)-2,2-dichlorcyclopropyl]-1-(1H-1,2,4-triazol-1-yl)butan-2-ol, (1.030) (2R)-2-[4-(4-Chlorphenoxy)-2-(trifluormethyl)phenyl]-1-(1H-1,2,4-triazol-1-yl)propan-2-ol, (1.031) (2S)-2-(1-Chlorcyclopropyl)-4-[(1R)-2,2-dichlorcyclopropyl]-1-(1H-1,2,4-triazol-1-yl)butan-2-ol, (1.032) (2S)-2-(1-Chlorcyclopropyl)-4-[(1S)-2,2-dichlorcyclopropyl]-1-(1H-1,2,4-triazol-1-yl)butan-2-ol, (1.033) (2S)-2-[4-(4-Chlorphenoxy)-2-(trifluormethyl)phenyl]-1-(1H-1,2,4-triazol-1-yl)propan-2-ol, (1.034) (R)-[3-(4-Chlor-2-fluorphenyl)-5-(2,4-difluorphenyl)-1,2-oxazol-4-yl](pyridin-3-yl)methanol, (1.035) (S)-[3-(4-Chlor-2-fluorphenyl)-5-(2,4-difluorphenyl)-1,2-oxazol-4-yl] (pyridin-3 -yl)methanol, (1.036) [3 -(4-Chlor-2-fluorphenyl)-5-(2,4-difluorphenyl)-1,2-oxazol-4-yl](pyridin-3-yl)methanol, (1.037) 1-({(2R,4S)-2-[2-Chlor-4-(4-chlorphenoxy)phenyl]-4-methyl-1,3-dioxolan-2-yl}methyl)-1H-1,2,4-triazol, (1.038) 1-({(2S,4S)-2-[2-Chlor-4-(4-chlorphenoxy)phenyl]-4-methyl-1,3-dioxolan-2-yl}methyl)-1H-1,2,4-triazol, (1.039) 1-{[3-(2-Chlorphenyl)-2-(2,4-difluorphenyl)oxiran-2-yl]methyl}-1H-1,2,4-triazol-5-yl-thiocyanat, (1.040) 1-{[rel(2R,3R)-3-(2-Chlorphenyl)-2-(2,4-difluorphenyl)oxiran-2-yl]methyl}-1H-1,2,4-triazol-5-yl-thiocyanat, (1.041) 1-{[rel(2R,3S)-3-(2-Chlorphenyl)-2-(2,4-difluorphenyl)oxiran-2-yl]methyl}-1H-1,2,4-triazol-5-yl-thiocyanat, (1.042) 2-[(2R,4R,5R)-1-(2,4-Dichlorphenyl)-5-hydroxy-2,6,6-trimethylheptan-4-yl]-2,4-dihydro-3H-1,2,4-triazol-3-thion, (1.043) 2-[(2R,4R,5S)-1-(2,4-Dichlorphenyl)-5-hydroxy-2,6,6-trimethylheptan-4-yl]-2,4-dihydro-3H-1,2,4-triazol-3-thion, (1.044) 2-[(2R,4S,5R)-1-(2,4-Dichlorophenyl)-5-hydroxy-2,6,6-trimethylheptan-4-yl]-2,4-dihydro-3H-1,2,4-triazol-3-thion, (1.045) 2-[(2R,4S,SS)-1-(2,4-Dichlorphenyl)-5-hydroxy-2,6,6-trimethylheptan-4-yl]-2,4-dihydro-3H-1,2,4-triazol-3-thion, (1.046) 2-[(2S,4R,5R)-1-(2,4-Dichlorphenyl)-5-hydroxy-2,6,6-trimethylheptan-4-yl]-2,4-dihydro-3H-1,2,4-triazol-3-thion, (1.047) 2-[(2S,4R,5S)-1-(2,4-Dichlorphenyl)-5-hydroxy-2,6,6-trimethylheptan-4-yl]-2,4-dihydro-3H-1,2,4-triazol-3-thion, (1.048) 2-[(2S,4S,5R)-1-(2,4-Dichlorphenyl)-5-hydroxy-2,6,6-trimethylheptan-4-yl]-2,4-dihydro-3H-1,2,4-triazol-3-thion, (1.049) 2-[(2S,4S,5S)-1-(2,4-Dichlorphenyl)-5-hydroxy-2,6,6-trimethylheptan-4-yl]-2,4-dihydro-3H-1,2,4-triazol-3-thion, (1.050) 2-[1-(2,4-Dichlorphenyl)-5-hydroxy-2,6,6-trimethylheptan-4-yl]-2,4-dihydro-3H-1,2,4-triazol-3-thion, (1.051) 2-[2-Chlor-4-(2,4-dichlorophenoxy)phenyl]-1-(1H-1,2,4-triazol-1-yl)propan-2-ol, (1.052) 2-[2-Chlor-4-(4-chlorphenoxy)phenyl] -1 -(1H-1,2,4-triazol-1 - yl)butan-2-ol, (1.053) 2-[4-(4-Chlorphenoxy)-2-(trifluormethyl)phenyl]-1-(1H-1,2,4-triazol-1-yl)butan-2-ol, (1.054) 2-[4-(4-Chlorphenoxy)-2-(trifluormethyl)phenyl]-1-(1H-1,2,4-triazol-1-yl)pentan-2-ol, (1.055) 2-[4-(4-Chlorphenoxy)-2-(trifluormethyl)phenyl]-1-(1H-1,2,4-triazol-1-yl)propan-2-ol, (1.056) 2-{[3-(2-Chlorphenyl)-2-(2,4-difluorphenyl)oxiran-2-yl]methyl}-2,4-dihydro-3H-1,2,4-triazol-3-thion, (1.057) 2-{[rel(2R,3R)-3-(2-Chlorphenyl)-2-(2,4-difluorphenyl)oxiran-2-yl]methyl}-2,4-dihydro-3H-1,2,4-triazol-3-thion, (1.058) 2- { [rel(2R,3 S)-3 -(2-Chlorphenyl)-2-(2,4-difluorphenyl)oxiran-2-yl]methyl}-2,4-dihydro-3H-1,2,4-triazol-3-thion, (1.059) 5-(4-Chlorbenzyl)-2-(chlormethyl)-2-methyl-1-(1H-1,2,4-triazol-1-ylmethyl)cyclopentanol, (1.060) 5-(Allylsulfanyl)-1-{[3-(2-chlorphenyl)-2-(2,4-difluorphenyl)oxiran-2-yl]methyl}-1H-1,2,4-triazol, (1.061) 5-(Allylsulfanyl)-1-{[rel(2R,3R)-3-(2-chlorphenyl)-2-(2,4-difluorphenyl)oxiran-2-yl]methyl}-1H-1,2,4-triazol, (1.062) 5-(Allylsulfanyl)-1-{[rel(2R,3S)-3-(2-chlorphenyl)-2-(2,4-difluorphenyl)oxiran-2-yl]methyl}-1H-1,2,4-triazol, (1.063) N'-(2,5-Dimethyl-4-{[3-(1,1,2,2-tetrafluorethoxy)phenyl]sulfanyl}phenyl)-N-ethyl-N-methylimidoformamid, (1.064) N'-(2,5-Dimethyl-4-{[3-(2,2,2-trifluorethoxy)phenyl]sulfanyl}phenyl)-N-ethyl-N-methylimidoformamid, (1.065) N'-(2,5-Dimethyl-4-{ [3-(2,2,3,3-tetrafluorpropoxy)phenyl]sulfanyl}phenyl)-N-ethyl-N-methylimidoformamid, (1.066) N'-(2,5-Dimethyl-4-{[3-(pentafluorethoxy)phenyl]sulfanyl}phenyl)-N-ethyl-N-methylimidoformamid, (1.067) N'-(2,5-Dimethyl-4-{3-[(1,1,2,2-tetrafluorethyl)sulfanyl]phenoxy}phenyl)-N-ethyl-N-methylimidoformamid, (1.068) N'-(2,5-Dimethyl-4-{3-[(2,2,2-trifluorethyl)sulfanyl]phenoxy}phenyl)-N-ethyl-N-methylimidoformamid, (1.069) N'-(2,5-Dimethyl-4-{3-[(2,2,3,3-tetrafluorpropyl)sulfanyl]phenoxy}phenyl)-N-ethyl-N-methylimidoformamid, (1.070) N'-(2,5-Dimethyl-4-{3-[(pentafluorethyl)sulfanyl]phenoxy}phenyl)-N-ethyl-N-methylimidoformamid, (1.071) N'-(2,5-Dimethyl-4-phenoxyphenyl)-N-ethyl-N-methylimidoformamid, (1.072) N'-(4-{[3-(Difluormethoxy)phenyl]sulfanyl}-2,5-dimethylphenyl)-N-ethyl-N-methylimidoformamid, (1.073) N'-(4-{3-[(Difluormethyl)sulfanyl]phenoxy}-2,5-dimethylphenyl)-N-ethyl-N-methylimidoformamid, (1.074) N'-[5-Brom-6-(2,3-dihydro-1H-inden-2-yloxy)-2-methylpyridin-3-yl]-N-ethyl-N-methylimidoformamid, (1.075) N'-{4-[(4,5-Dichlor-1,3-thiazol-2-yl)oxy]-2,5-dimethylphenyl}-N-ethyl-N-methylimidoformamid, (1.076) N'-{5-Brom-6-[(1R)-1-(3,5-difluorophenyl)ethoxy]-2-methylpyridin-3-yl }-N-ethyl-N-methylimidoformamid, (1.077) N'-{5-Brom-6-[(1S)-1-(3,5-difluorphenyl)ethoxy]-2-methylpyridin-3-yl}-N-ethyl-N-methylimidoformamid, (1.078) N'-{5-Brom-6-[(cis-4-isopropylcyclohexyl)oxy]-2-methylpyridin-3-yl}-N-ethyl-N-methylimidoformamid, (1.079) N'-{5-Brom-6-[(trans-4-isopropylcyclohexyl)oxy]-2-methylpyridin-3-yl}-N-ethyl-N-methylimidoformamid, (1.080) N'-{5-Bromo-6-[1-(3,5-difluorphenyl)ethoxy]-2-methylpyridin-3-yl}-N-ethyl-N-methylimidoformamid, (1.081) Mefentrifluconazole, (1.082) Ipfentrifluconazole.

2) Inhibitoren der Atmungskette am Komplex I oder II beispielsweise (2.001) Benzovindiflupyr, (2.002) Bixafen, (2.003) Boscalid, (2.004) Carboxin, (2.005) Fluopyram, (2.006) Flutolanil, (2.007) Fluxapyroxad, (2.008) Furametpyr, (2.009) Isofetamid, (2.010) Isopyrazam (anti-epimeres Enantiomer 1R,4S,9S), (2.011) Isopyrazam (anti-epimeres Enantiomer 1S,4R,9R), (2.012) Isopyrazam (anti-epimeres Racemat 1RS,4SR,9SR), (2.013) Isopyrazam (Mischung des syn-epimeren Razemates 1RS,4SR,9RS und des anti-epimeren Razemates 1RS,4SR,9SR), (2.014) Isopyrazam (syn-epimeres Enantiomer 1R,4S,9R), (2.015) Isopyrazam (syn-epimeres Enantiomer 1S,4R,9S), (2.016) Isopyrazam (syn-epimeres Racemat 1RS,4SR,9RS), (2.017) Penflufen, (2.018) Penthiopyrad, (2.019) Pydiflumetofen, (2.020) Pyraziflumid, (2.021) Sedaxane, (2.022) 1,3-Dimethyl-N-(1,1,3-trimethyl-2,3-dihydro-1H-inden-4-yl)-1H-pyrazol-4-carboxamid, (2.023) 1,3-Dimethyl-N-[(3R)-1,1,3-trimethyl-2,3-dihydro-1H-inden-4-yl]-1H-pyrazol-4-carboxamid, (2.024) 1,3-Dimethyl-N-[(3S)-1,1,3-trimethyl-2,3-dihydro-1H-inden-4-yl]-1H-pyrazol-4-carboxamid, (2.025) 1-Methyl-3-(trifluormethyl)-N-[2'-(trifluormethyl)biphenyl-2-yl]-1H-pyrazol-4-carboxamid, (2.026) 2-Fluor-6-(trifluoromethyl)-N-(1,1,3-trimethyl-2,3-dihydro-1H-inden-4-yl)benzamid, (2.027) 3-(Difluormethyl)-1-methyl-N-(1,1,3-trimethyl-2,3-dihydro-1H-inden-4-yl)-1H-pyrazol-4-carboxamid, (2.028) 3-(Difluormethyl)-1-methyl-N-[(3R)-1,1,3-trimethyl-2,3-dihydro-1H-inden-4-yl]-1H-pyrazol-4-carboxamid, (2.029) 3-(Difluormethyl)-1-methyl-N-[(3S)-1,1,3-trimethyl-2,3-dihydro-1H-inden-4-yl]-1H-pyrazol-4-carboxamid, (2.030) 3-(Difluormethyl)-N-(7-fluor-1,1,3-trimethyl-2,3-dihydro-1H-inden-4-yl)-1-methyl-1H-pyrazol-4-carboxamid, (2.031) 3-(Difluormethyl)-N-[(3R)-7-fluor-1,1,3-trimethyl-2,3-dihydro-1H-inden-4-yl]-1-methyl-1H-pyrazol-4-carboxamid, (2.032) 3-(Difluoromethyl)-N-[(3S)-7-fluor-1,1,3-trimethyl-2,3-dihydro-1H-inden-4-yl]-1-methyl-1H-pyrazol-4-carboxamid, (2.033) 5,8-Difluor-N- [2-(2-fluor-4-{[4-(trifluormethyl)pyridin-2-yl]oxy}phenyl)ethyl]quinazolin-4-amin, (2.034) N-(2-Cyclopentyl-5-fluorbenzyl)-N-cyclopropyl-3-(difluormethyl)-5-fluor-1-methyl-1H-pyrazol-4-carboxamid, (2.035) N-(2-tert-Butyl-5-methylbenzyl)-N-cyclopropyl-3-(difluormethyl)-5-fluor-1-methyl-1H-pyrazol-4-carboxamid, (2.036) N-(2-tert-Butylbenzyl)-N-cyclopropyl-3-(difluormethyl)-5-fluor-1-methyl-1H-pyrazol-4-carboxamid, (2.037) N-(5-Chlor-2-ethylbenzyl)-N-cyclopropyl-3-(difluormethyl)-5-fluor-1-methyl-1H-pyrazol-4-carboxamid, (2.038) N-(5-Chlor-2-isopropylbenzyl)-N-cyclopropyl-3-(difluormethyl)-5-fluor-1-methyl-1H-pyrazol-4-carboxamid, (2.039) N-[(1R,4S)-9-(Dichlormethylen)-1,2,3,4-tetrahydro-1,4-methanonaphthalen-5-yl]-3-(difluormethyl)-1-methyl-1H-pyrazol-4-carboxamid, (2.040) N-[(1S,4R)-9-(Dichlormethylen)-1,2,3,4-tetrahydro-1,4-methanonaphthalen-5-yl]-3-(difluormethyl)-1-methyl-1H-pyrazol-4-carboxamid, (2.041) N-[1-(2,4-Dichlorphenyl)-1-methoxypropan-2-yl]-3-(difluormethyl)-1-methyl-1H-pyrazol-4-carboxamid, (2.042) N-[2-Chlor-6-(trifluormethyl)benzyl]-N-cyclopropyl-3-(difluormethyl)-5-fluor-1-methyl-1H-pyrazol-4-carboxamid, (2.043) N-[3-Chlor-2-fluor-6-(trifluormethyl)benzyl]-N-cyclopropyl-3-(difluormethyl)-5-fluor-1-methyl-1H-pyrazol-4-carboxamid, (2.044) N-[5-Chlor-2-(trifluormethyl)benzyl]-N-cyclopropyl-3-(difluormethyl)-5-fluor-1-methyl-1H-pyrazol-4-carboxamid, (2.045) N-Cyclopropyl-3-(difluormethyl)-5-fluor-1-methyl-N-[5-methyl-2-(trifluormethyl)benzyl]-1H-pyrazol-4-carboxamid, (2.046) N-Cyclopropyl-3-(difluormethyl)-5-fluor-N-(2-fluor-6-isopropylbenzyl)-1-methyl-1H-pyrazol-4-carboxamid, (2.047) N-Cyclopropyl-3-(difluormethyl)-5-fluor-N-(2-isopropyl-5-methylbenzyl)-1-methyl-1H-pyrazol-4-carboxamid, (2.048) N-Cyclopropyl-3-(difluormethyl)-5-fluor-N-(2-isopropylbenzyl)-1-methyl-1H-pyrazol-4-carbothioamid, (2.049) N-Cyclopropyl-3-(difluoromethyl)-5-fluor-N-(2-isopropylbenzyl)-1-methyl-1H-pyrazol-4-carboxamid, (2.050) N-Cyclopropyl-3-(difluormethyl)-5-fluor-N-(5-fluor-2-isopropylbenzyl)-1-methyl-1H-pyrazol-4-carboxamid, (2.051) N-Cyclopropyl-3-(difluormethyl)-N-(2-ethyl-4,5-dimethylbenzyl)-5-fluor-1-methyl-1H-pyrazol-4-carboxamid, (2.052) N-Cyclopropyl-3-(difluormethyl)-N-(2-ethyl-5-fluorbenzyl)-5-fluor-1-methyl-1H-pyrazol-4-carboxamid, (2.053) N-Cyclopropyl-3-(difluormethyl)-N-(2-ethyl-5-methylbenzyl)-5-fluor-1-methyl- 1H-pyrazole-4-carboxamid, (2.054) N-Cyclopropyl-N-(2-cyclopropyl-5-fluorbenzyl)-3-(difluormethyl)-5-fluor-1-methyl-1H-pyrazole-4-carboxamid, (2.055) N-Cyclopropyl-N-(2-cyclopropyl-5-methylbenzyl)-3-(difluormethyl)-5-fluor-1-methyl-1H-pyrazole-4-carboxamid, (2.056) N-Cyclopropyl-N-(2-cyclopropylbenzyl)-3-(difluormethyl)-5-fluor-1-methyl-1H-pyrazole-4-carboxamid.

3) Inhibitoren der Atmungskette am Komplex III, beispielsweise (3.001) Ametoctradin, (3.002) Amisulbrom, (3.003) Azoxystrobin, (3.004) Coumethoxystrobin, (3.005) Coumoxystrobin, (3.006) Cyazofamid, (3.007) Dimoxystrobin, (3.008) Enoxastrobin, (3.009) Famoxadon, (3.010) Fenamidon, (3.011) Flufenoxystrobin, (3.012) Fluoxastrobin, (3.013) Kresoxim-Methyl, (3.014) Metominostrobin, (3.015) Orysastrobin, (3.016) Picoxystrobin, (3.017) Pyraclostrobin, (3.018) Pyrametostrobin, (3.019) Pyraoxystrobin, (3.020) Trifloxystrobin (3.021) (2E)-2-{2-[({[(1E)-1-(3-{[(E)-1-Fluor-2-phenylvinyl]oxy}phenyl)ethyliden]amino}oxy)methyl]phenyl}-2-(methoxyimino)-N-methylacetamid, (3.022) (2E,3Z)-5-{[1-(4-Chlorphenyl)-1H-pyrazol-3-yl]oxy}-2-(methoxyimino)-N,3-dimethylpent-3-enamid, (3.023) (2R)-2-{2-[(2,5-Dimethylphenoxy)methyl]phenyl}-2-methoxy-N-methylacetamid, (3.024) (2S)-2-{2-[(2,5-Dimethylphenoxy)methyl]phenyl}-2-methoxy-N-methylacetamid, (3.025) (3S,6S,7R,8R)-8-Benzyl-3-[({3-[(isobutyryloxy)methoxy]-4-methoxypyridin-2-yl}carbonyl)amino]-6-methyl-4,9-dioxo-1,5-dioxonan-7-yl-2-methylpropanoat, (3.026) 2-{2-[(2,5-Dimethylphenoxy)methyl]phenyl}-2-methoxy-N-methylacetamid, (3.027) N-(3-Ethyl-3,5,5-trimethylcyclohexyl)-3-formamido-2-hydroxybenzamid, (3.028) (2E,3Z)-5-{[1-(4-Chlor-2-fluorphenyl)-1H-pyrazol-3-yl]oxy}-2-(methoxyimino)-N,3-dimethylpent-3-enamid, (3.029) Methyl {5-[3-(2,4-dimethylphenyl)-1H-pyrazol-1-yl]-2-methylbenzyl}carbamate.

4) Inhibitoren der Mitose und Zellteilung, beispielsweise (4.001) Carbendazim, (4.002) Diethofencarb, (4.003) Ethaboxam, (4.004) Fluopicolid, (4.005) Pencycuron, (4.006) Thiabendazol, (4.007) Thiophanat-Methyl, (4.008) Zoxamid, , (4.009) 3-Chlor-4-(2,6-difluorphenyl)-6-methyl-5-phenylpyridazin, (4.010) 3-Chlor-5-(4-chlorphenyl)-4-(2,6-difluorphenyl)-6-methylpyridazin, (4.011) 3-Chlor-5-(6-chlorpyridin-3-yl)-6-methyl-4-(2,4,6-trifluorphenyl)pyridazin, (4.012) 4-(2-Brom-4-fluorphenyl)-N-(2,6-difluorphenyl)-1,3-dimethyl-1H-pyrazol-5-amin, (4.013) 4-(2-Brom-4-fluorphenyl)-N-(2-brom-6-fluorphenyl)-1,3-dimethyl-1H-pyrazol-5-amin, (4.014) 4-(2-Brom-4-fluorphenyl)-N-(2-bromphenyl)-1,3-dimethyl-1H-pyrazol-5-amin, (4.015) 4-(2-Brom-4-fluorphenyl)-N-(2-chlor-6-fluorphenyl)-1,3-dimethyl-1H-pyrazol-5-amin, (4.016) 4-(2-Brom-4-fluorphenyl)-N-(2-chlorphenyl)-1,3-dimethyl-1H-pyrazol-5-amin, (4.017) 4-(2-Brom-4-fluorphenyl)-N-(2-fluorphenyl)-1,3-dimethyl-1H-pyrazol-5-amin, (4.018) 4-(2-Chlor-4-fluorphenyl)-N-(2,6-difluorphenyl)-1,3-dimethyl-1H-pyrazol-5-amin, (4.019) 4-(2-Chlor-4-fluorphenyl)-N-(2-chlor-6-fluorphenyl)-1,3-dimethyl-1H-pyrazol-5-amin, (4.020) 4-(2-Chlor-4-fluorphenyl)-N-(2-chlorphenyl)-1,3-dimethyl-1H-pyrazol-5-amin, (4.021) 4-(2-Chlor-4-fluorphenyl)-N-(2-fluorphenyl)-1,3-dimethyl-1H-pyrazol-5-amin, (4.022) 4-(4-Chlorphenyl)-5-(2,6-difluorphenyl)-3,6-dimethylpyridazin, (4.023) N-(2-Brom-6-fluorphenyl)-4-(2-chlor-4-fluorphenyl)-1,3-dimethyl-1H-pyrazol-5-amin, (4.024) N-(2-Bromphenyl)-4-(2-chlor-4-fluorphenyl)-1,3-dimethyl-1H-pyrazol-5-amin, (4.025) N-(4-Chlor-2,6-difluorphenyl)-4-(2-chlor-4-fluorphenyl)-1,3-dimethyl-1H-pyrazol-5-amin.

5) Verbindungen mit Befähigung zu Multisite-Aktivität, beispielsweise (5.001) Bordeauxmischung, (5.002) Captafol, (5.003) Captan, (5.004) Chlorthalonil, (5.005) Kupferhydroxid, (5.006) Kupfernaphthenat, (5.007) Kupferoxid, (5.008) Kupferoxychlorid, (5.009) Kupfer(2+)-sulfat, (5.010) Dithianon, (5.011) Dodin, (5.012) Folpet, (5.013) Mancozeb, (5.014) Maneb, (5.015) Metiram, (5.016) Zinkmetiram, (5.017) Kupfer-Oxin, (5.018) Propineb, (5.019) Schwefel und Schwefelzubereitungen einschließlich Calciumpolysulfid, (5.020) Thiram, (5.021) Zineb, (5.022) Ziram, (5.023) 6-Ethyl-5,7-dioxo-6,7-dihydro-5H-pyrrolo[3',4':5,6][1,4]dithiino[2,3-c][1,2]thiazole-3-carbonitrile.

6) Verbindungen, die zum Auslösen einer Wirtsabwehr befähigt sind, beispielsweise (6.001) Acibenzolar-S-Methyl, (6.002) Isotianil, (6.003) Probenazol, (6.004) Tiadinil.

7) Inhibitoren der Aminosäure- und/oder Protein-Biosynthese, beispielsweise (7.001) Cyprodinil, (7.002) Kasugamycin, (7.003) Kasugamycinhydrochlorid-hydrat, (7.004) Oxytetracyclin (7.005) Pyrimethanil, (7.006) 3-(5-Fluor-3,3,4,4-tetramethyl-3,4-dihydroisochinolin-1-yl)chinolin.

(8) Inhibitoren der ATP-Produktion, beispielsweise (8.001) Silthiofam.

9) Inhibitoren der Zellwandsynthese, beispielsweise (9.001) Benthiavalicarb, (9.002) Dimethomorph, (9.003) Flumorph, (9.004) Iprovalicarb, (9.005) Mandipropamid, (9.006) Pyrimorph, (9.007) Valifenalat, (9.008) (2E)-3-(4-tert.-Butylphenyl)-3-(2-chlorpyridin-4-yl)-1-(morpholin-4-yl)prop-2-en-1-on, (9.009) (2Z)-3-(4-tert.-Butylphenyl)-3-(2-chlorpyridin-4-yl)-1-(morpholin-4-yl)prop-2-en-1-on.

10) Inhibitoren der Lipid- und Membran-Synthese, beispielsweise (10.001) Propamocarb, (10.002) Propamocarbhydrochlorid, (10.003) Tolclofos-Methyl.

11) Inhibitoren der Melanin-Biosynthese, beispielsweise (11.001) Tricyclazol, (11.002) 2,2,2-Trifluorethyl-{3-methyl-1-[(4-methylbenzoyl)amino]butan-2-yl}carbamat.

12) Inhibitoren der Nukleinsäuresynthese, beispielsweise (12.001) Benalaxyl, (12.002) Benalaxyl-M (Kiralaxyl), (12.003) Metalaxyl, (12.004) Metalaxyl-M (Mefenoxam).

13) Inhibitoren der Signaltransduktion, beispielsweise (13.001) Fludioxonil, (13.002) Iprodion, (13.003) Procymidon, (13.004) Proquinazid, (13.005) Quinoxyfen, (13.006) Vinclozolin.

14) Verbindungen, die als Entkoppler wirken können, beispielsweise (14.001) Fluazinam, (14.002) Meptyldinocap.

15) Weitere Verbindungen, beispielsweise (15.001) Abscisinsäure, (15.002) Benthiazol, (15.003) Bethoxazin, (15.004) Capsimycin, (15.005) Carvon, (15.006) Chinomethionat, (15.007) Cufraneb, (15.008) Cyflufenamid, (15.009) Cymoxanil, (15.010) Cyprosulfamid, (15.011) Flutianil, (15.012) Fosetyl-Aluminium, (15.013) Fosetyl-Calcium, (15.014) Fosetyl-Natrium, (15.015) Methylisothiocyanat, (15.016) Metrafenon, (15.017) Mildiomycin, (15.018) Natamycin, (15.019) Nickel-Dimethyldithiocarbamat, (15.020) Nitrothal-Isopropyl, (15.021) Oxamocarb, (15.022) Oxathiapiprolin, (15.023) Oxyfenthiin, (15.024) Pentachlorphenol und Salze, (15.025) Phosphonsäure und deren Salze, (15.026) Propamocarb-fosetylat, (15.027) Pyriofenone (Chlazafenone) (15.028) Tebufloquin, (15.029) Tecloftalam, (15.030) Tolnifanide, (15.031) 1-(4-{4-[(SR)-5-(2,6-Difluorphenyl)-4,5 -dihydro-1,2-oxazol-3 -yl] -1,3 -thiazol-2-yl }piperidin-1 -yl)-2- [5 -methyl-3 -(trifluormethyl)- 1H-pyrazol-1-yl]ethanon, (15.032) 1-(4-{4-[(5S)-5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, (15.033) 2-(6-Benzylpyridin-2-yl)quinazolin, (15.034) 2,6-Dimethyl-1H,5H-[1,4]dithiino[2,3-c:5,6-c']dipyrrol-1,3,5,7(2H,6H)-tetron, (15.035) 2-[3,5-Bis(difluormethyl)-1H-pyrazol-1-yl]-1-[4-(4-{5-[2-(prop-2-in-1-yloxy)phenyl]-4,5-dihydro-1,2-oxazol-3-yl}-1,3-thiazol-2-yl)piperidin-1-yl]ethanon, (15.036) 2-[3,5-Bis(difluormethyl)-1H-pyrazol-1-yl]-1-[4-(4-{5-[2-chlor-6-(prop-2-in-1-yloxy)phenyl]-4,5-dihydro-1,2-oxazol-3-yl}-1,3-thiazol-2-yl)piperidin-1 -yl]ethanon, (15.037) 2-[3,5-Bis(difluormethyl)-1H-pyrazol-1-yl] -1 - [4-(4- {5 - [2-fluor-6-(prop-2-in-1 -yloxy)phenyl] -4,5 -dihydro-1,2-oxazol-3 -yl} -1,3 -thiazol-2-yl)piperidin-1-yl]ethanon, (15.038) 2-[6-(3-Fluor-4-methoxyphenyl)-5-methylpyridin-2-yl]quinazolin, (15.039) 2-{(5R)-3-[2-(1-{[3,5-Bis(difluormethyl)-1H-pyrazol-1-yl]acetyl}piperidin-4-yl)-1,3-thiazol-4-yl]-4,5-dihydro-1,2-oxazol-5-yl}-3-chlorphenyl methanesulfonat, (15.040) 2-{(5S)-3-[2-(1-{[3,5-Bis(difluormethyl)-1H-pyrazol-1-yl]acetyl}piperidin-4-yl)-1,3-thiazol-4-yl]-4,5-dihydro-1,2-oxazol-5-yl}-3-chlorphenyl methanesulfonat, (15.041) 2-{2-[(7,8-Difluor-2-methylquinolin-3-yl)oxy]-6-fluorphenyl}propan-2-ol, (15.042) 2-{2-Fluor-6-[(8-fluor-2-methylquinolin-3-yl)oxy]phenyl}propan-2-ol, (15.043) 2-{3-[2-(1-{[3,5-Bis(difluormethyl)-1H-pyrazol-1-yl]acetyl}piperidin-4-yl)-1,3-thiazol-4-yl]-4,5-dihydro-1,2-oxazol-5-yl}-3-chlorphenyl-methansulfonat, (15.044) 2-{3-[2-(1-{ [3,5-Bis(difluormethyl)-1H-pyrazol-1-yl]acetyl}piperidin-4-yl)-1,3-thiazol-4-yl]-4,5-dihydro-1,2-oxazol-5-yl}phenyl methanesulfonat, (15.045) 2-Phenylphenol und deren Salze, (15.046) 3-(4,4,5-Trifluor-3,3-dimethyl-3,4-dihydroisoquinolin-1 -yl)quinolin, (15.047) 3-(4,4-Difluor-3,3-dimethyl-3,4-dihydroisoquinolin-1-yl)quinolin, (15.048) 4-Amino-5-fluorpyrimidin-2-ol (Tautomere Form: 4-Amino-5-fluorpyrimidin-2(1H)-on), (15.049) 4-Oxo-4-[(2-phenylethyl)amino]buttersäure, (15.050) 5-Amino-1,3,4-thiadiazol-2-thiol, (15.051) 5-Chlor-N'-phenyl-N'-(prop-2-yn-1-yl)thiophen-2-sulfonohydrazid, (15.052) 5-Fluor-2-[(4-fluorbenzyl)oxy]pyrimidin-4-amin, (15.053) 5-Fluor-2-[(4-methylbenzyl)oxy]pyrimidin-4-amin, (15.054) 9-Fluor-2,2-dimethyl-5-(quinolin-3-yl)-2,3-dihydro-1,4-benzoxazepin, (15.055) But-3-yn-1-yl {6-[({[(Z)-(1-methyl-1H-tetrazol-5-yl)(phenyl)methylen]amino}oxy)methyl]pyridin-2-yl}carbamat, (15.056) Ethyl (2Z)-3-amino-2-cyano-3-phenylacrylat, (15.057) Phenazin-1-carbonsäure, (15.058) Propyl 3,4,5-trihydroxybenzoat, (15.059) Quinolin-8-ol, (15.060) Quinolin-8-ol sulfat (2:1), (15.061) tert-Butyl {6-[({[(1-methyl-1H-tetrazol-5-yl)(phenyl)methylene]amino}oxy)methyl]pyridin-2-yl}carbamat, (15.062) 5-Flu-

or-4-imino-3-methyl-1)sulfonyl]-3,4-dihydropyrimidin-2(1H)-one.

Bevorzugte Fungizide sind ausgewählt aus der Gruppe bestehend aus Benalaxyl, Bitertanol, Bromuconazol, Captafol, Carbendazim, Carpropamid, Cyazofamid, Cyproconazol, Diethofencarb, Edifenphos, Fenpropimorph, Fentine, Fluquinconazol, Fosetyl, Fluoroimide, Folpet, Iminoctadine, Iprodionem, Iprovalicarb, Kasugamycin, Maneb, Nabam, Pencycuron, Prochloraz, Propamocarb, Propineb, Pyrimethanil, Sprioxamine, Quintozene, Tebuconazole, Tolylfluanid, Triadimefon, Triadimenol, Trifloxystrobin, Zineb.

Insektizide, akarizide, nematizide, mitizide und verwandte Wirkstoffe sind, beispielsweise (analog zu den Herbiziden und Fungiziden werden die Verbindungen nach Möglichkeit mit ihren Common names bezeichnet, hier in der üblichen englischen Schreibweise):

(1) Acetylcholinesterase(AChE)-Inhibitoren, vorzugsweise Carbamate ausgewählt aus Alanycarb, Aldicarb, Bendiocarb, Benfuracarb, Butocarboxim, Butoxycarboxim, Carbaryl, Carbofuran, Carbosulfan, Ethiofencarb, Fenobucarb, Formetanate, Furathiocarb, Isoprocarb, Methiocarb, Methomyl, Metolcarb, Oxamyl, Pirimicarb, Propoxur, Thiodicarb, Thiofanox, Triazamate, Trimethacarb, XMC und Xylylcarb, oder Organophosphate ausgewählt aus Acephat, Azamethiphos, Azinphos-ethyl, Azinphosmethyl, Cadusafos, Chlorethoxyfos, Chlorfenvinphos, Chlormephos, Chlorpyrifos-methyl, Coumaphos, Cyanophos, Demeton-S-methyl, Diazinon, Dichlorvos/DDVP, Dicrotophos, Dimethoat, Dimethylvinphos, Disulfoton, EPN, Ethion, Ethoprophos, Famphur, Fenamiphos, Fenitrothion, Fenthion, Fosthiazat, Heptenophos, Imicyafos, Isofenphos, Isopropyl-O-(methoxyaminothio-phosphoryl)salicylat, Isoxathion, Malathion, Mecarbam, Methamidophos, Methidathion, Mevinphos, Monocrotophos, Naled, Omethoate, Oxydemeton-methyl, Parathion-methyl, Phenthoat, Phorat, Phosalon, Phosmet, Phosphamidon, Phoxim, Pirimiphos-methyl, Profenofos, Propetamphos, Prothiofos, Pyraclofos, Pyridaphenthion, Quinalphos, Sulfotep, Tebupirimfos, Temephos, Terbufos, Tetrachlorvinphos, Thiometon, Triazophos, Triclorfon und Vamidothion.

(2) GABA-gesteuerte Chlorid-Kanal-Blocker, vorzugsweise Cyclodien-organochlorine ausgewählt aus Chlordan und Endosulfan, oder Phenylpyrazole (Fiprole) ausgewählt aus Ethiprol und Fipronil.

(3) Natrium-Kanal-Modulatoren, vorzugsweise Pyrethroide ausgewählt aus Acrinathrin, Allethrin, d-cistrans-Allethrin, d-trans-Allethrin, Bifenthrin, Bioallethrin, Bioallethrin-S-cyclopentenyl-Isomer, Bioresmethrin, Cycloprothrin, Cyfluthrin, beta-Cyfluthrin, Cyhalothrin, lambda-Cyhalothrin, gamma-Cyhalothrin, Cypermethrin, alpha-Cypermethrin, beta-Cypermethrin, theta-Cypermethrin, zeta-Cypermethrin, Cyphenothrin [(1R)-trans-Isomer], Deltamethrin, Empenthrin [(EZ)-(1R)-Isomer], Esfenvalerat, Etofenprox, Fenpropathrin, Fenvalerat, Flucythrinat, Flumethrin, tau-Fluvalinat, Halfenprox, Imiprothrin, Kadethrin, Momfluorothrin, Permethrin, Phenothrin [(1R)-trans-Isomer], Prallethrin, Pyrethrine (pyrethrum), Resmethrin, Silafluofen, Tefluthrin, Tetramethrin, Tetramethrin [(1R)-Isomer], Tralomethrin und Transfluthrin, oder DDT oder Methoxychlor.

(4) Kompetitive Modulatoren des nicotinischen Acetylcholin-Rezeptors (nAChR), vorzugsweise Neonicotinoide ausgewählt aus Acetamiprid, Clothianidin, Dinotefuran, Imidacloprid, Nitenpyram, Thiacloprid und Thiamethoxam, oder Nicotin, oder Sufoximine ausgewählt aus Sulfoxaflor, oder Butenolide ausgewählt aus Flupyradifurone.

(5) Allosterische Modulatoren des nicotinischen Acetylcholin-Rezeptors (nAChR), vorzugsweise Spinosyne ausgewählt aus Spinetoram und Spinosad.

(6) Allosterische Modulatoren des Glutamat-abhängigen Chloridkanals (GluCl), vorzugsweise Avermectine/Milbemycine ausgewählt aus Abamectin, Emamectin-benzoat, Lepimectin und Milbemectin.

(7) Juvenilhormon-Mimetika, vorzugsweise Juvenilhormon-Analoge ausgewählt aus Hydropren, Kinopren und Methopren, oder Fenoxycarb oder Pyriproxyfen.

(8) Verschiedene nicht spezifische (multi-site) Inhibitoren, vorzugsweise Alkylhalogenide ausgewählt aus Methylbromid und andere Alkylhalogenide, oder Chloropicrin oder Sulfurylfluorid oder Borax oder Brechweinstein oder Methylisocyanaterzeuger ausgewählt aus Diazomet und Metam.

(9) TRPV-Kanal-Modulatoren chordotonaler Organe ausgewählt aus Pymetrozin und Pyrifluquinazon.

(10) Milbenwachstumsinhibitoren ausgewählt aus Clofentezin, Hexythiazox, Diflovidazin und Etoxazol.

(11) Mikrobielle Disruptoren der Insektendarmmembran ausgewählt aus *Bacillus thuringiensis* Subspezies *israe-*

*lensis, Bacillus sphaericus, Bacillus thuringiensis* Subspezies *aizawai*, *Bacillus thuringiensis* Subspezies *kurstaki, Bacillus thuringiensis* Subspezies *tenebrionis* und *B.t.*-Pflanzenproteine ausgewählt aus Cry1Ab, Cry1Ac, Cry1Fa, Cry1A.105, Cry2Ab, VIP3A, mCry3A, Cry3Ab, Cry3Bb und Cry34Ab1/35Ab1.

(12) Inhibitoren der mitochondrialen ATP-Synthase, vorzugsweise ATP-Disruptoren ausgewählt aus Diafenthiuron, oder Organozinnverbindungen ausgewählt aus Azocyclotin, Cyhexatin und Fenbutatinoxid, oder Propargit oder Tetradifon.

(13) Entkoppler der oxidativen Phoshorylierung durch Störung des Protonengradienten ausgewählt aus Chlorfenapyr, DNOC und Sulfluramid.

(14) Blocker des nicotinischen Acetylcholinrezeptorkanals ausgewählt aus Bensultap, Cartaphydrochlorid, Thiocyclam und Thiosultap-Natrium.

(15) Inhibitoren der Chitinbiosynthese, Typ 0, ausgewählt aus Bistrifluron, Chlorfluazuron, Diflubenzuron, Flucycloxuron, Flufenoxuron, Hexaflumuron, Lufenuron, Novaluron, Noviflumuron, Teflubenzuron und Triflumuron.

(16) Inhibitoren der Chitinbiosynthese, Typ 1 ausgewählt aus Buprofezin.

(17) Häutungsdisruptor (insbesondere bei Dipteren, d. h. Zweiflüglern) ausgewählt aus Cyromazin.

(18) Ecdyson-Rezeptor-Agonisten ausgewählt aus Chromafenozid, Halofenozid, Methoxyfenozid und Tebufenozid.

(19) Oktopamin-Rezeptor-Agonisten ausgewählt aus Amitraz.

(20) Mitochondriale Komplex-III-Elektronentransportinhibitoren ausgewählt aus Hydramethylnon, Acequinocyl und Fluacrypyrim.

(21) Mitochondriale Komplex-I-Elektronentransportinhibitoren, vorzugsweise METI-Akarizide ausgewählt aus Fenazaquin, Fenpyroximat, Pyrimidifen, Pyridaben, Tebufenpyrad und Tolfenpyrad, oder Rotenon (Derris).

(22) Blocker des spannungsabhängigen Natriumkanals ausgewählt aus Indoxacarb und Metaflumizone.

(23) Inhibitoren der Acetyl-CoA-Carboxylase, vorzugsweise Tetron- und Tetramsäurederivate ausgewählt aus Spirodiclofen, Spiromesifen und Spirotetramat.

(24) Inhibitoren des mitochondrialen Komplex-IV-Elektronentransports, vorzugsweise Phosphine ausgewählt aus Aluminiumphosphid, Calciumphosphid, Phosphin und Zinkphosphid, oder Cyanide ausgewählt aus Calciumcyanid, Kaliumcyanid und Natriumcyanid.

(25) Inhibitoren des mitochondrialen Komplex-II-Elektronentransports, vorzugsweise beta-Ketonitrilderivate ausgewählt aus Cyenopyrafen und Cyflumetofen, oder Carboxanilide ausgewählt aus Pyflubumid.

(28) Ryanodinrezeptor-Modulatoren, vorzugsweise Diamide ausgewählt aus Chlorantraniliprol, Cyantraniliprol und Flubendiamid.

(29) Modulatoren chordotonaler Organe (mit undefinierter Zielstruktur) ausgewählt aus Flonicamid.

(30) weitere Wirkstoffe ausgewählt aus Acynonapyr, Afidopyropen, Afoxolaner, Azadirachtin, Benclothiaz, Benzoximat, Benzpyrimoxan, Bifenazat, Broflanilid, Bromopropylat, Chinomethionat, Chloroprallethrin, Cryolit, Cyclaniliprol, Cycloxaprid, Cyhalodiamid, Dicloromezotiaz, Dicofol, epsilon-Metofluthrin, epsilon-Momfluthrin, Flometoquin, Fluazaindolizin, Fluensulfon, Flufenerim, Flufenoxystrobin, Flufiprol, Fluhexafon, Fluopyram, Flupyrimin, Fluralaner, Fluxametamid, Fufenozid, Guadipyr, Heptafluthrin, Imidaclothiz, Iprodione, kappa-Bifenthrin, kappa-Tefluthrin, Lotilaner, Meperfluthrin, Oxazosulfyl, Paichongding, Pyridalyl, Pyrifluquinazon, Pyriminostrobin, Spirobudiclofen, Spiropidion, Tetramethylfluthrin, Tetraniliprol, Tetrachlorantraniliprol, Tigolaner, Tioxazafen, Thiofluoximat, Triflumezopyrim und Iodmethan; des Weiteren Präparate auf Basis von *Bacillus firmus* (I-1582, BioNeem, Votivo), sowie folgende Verbindungen: 1-{2-Fluor-4-methyl-5-[(2,2,2-trifluorethyl)sulfinyl]phenyl}-3-(trifluormethyl)-1H-1,2,4-triazol-5-amin (bekannt aus WO2006/043635) (CAS 885026-50-6), {1'-[(2E)-3-(4-Chlorphenyl)prop-2-en-1-yl]-5-fluorspiro[indol-3,4'-piperidin]-1(2H)-yl}(2-chlorpyridin-4-yl)methanon (bekannt aus WO2003/106457) (CAS 637360-23-7), 2-Chlor-N-[2-{1-[(2E)-3-(4-chlorphenyl)prop-2-en-1-yl]piperidin-4-yl}-4-(trifluormethyl)phenyl]isonicotinamid (bekannt aus WO2006/003494) (CAS 872999-66-1), 3-(4-Chlor-2,6-dimethylphenyl)-4-hydroxy-8-methoxy-1,8-diazaspiro[4.5]dec-3-en-2-on (bekannt aus WO 2010052161) (CAS 1225292-17-0), 3-(4-Chlor-2, 6-dimethylphenyl)-8-methoxy-2-oxo-1,8-diazaspiro[4.5]dec-3-en-4-yl-ethylcarbonat (bekannt aus EP 2647626) (CAS-1440516-42-6), 4-(But-2-in-1-yloxy)-6-(3,5-dimethylpiperidin-1-yl)-5-fluorpyrimidin (bekannt aus WO2004/099160) (CAS 792914-58-0), PF1364 (bekannt aus JP2010/018586) (CAS-Reg.No. 1204776-60-2), (3E)-3-[1-[(6-Chlor-3-pyridyl)methyl]-2-pyridyliden]-1,1,1-trifluorpropan-2-on (bekannt aus WO2013/144213) (CAS 1461743-15-6), N-[3-(Benzylcarbamoyl)-4-chlorphenyl]-1-methyl-3-(pentafluorethyl)-4-(trifluormethyl)-1H-pyrazol-5-carboxamid (bekannt aus WO2010/051926) (CAS 1226889-14-0), 5-Brom-4-chlor-N-[4-chlor-2-methyl-6-(methylcarbamoyl)phenyl]-2-(3-chlor-2-pyridyl)pyrazol-3-carboxamid (bekannt aus CN103232431) (CAS 1449220-44-3), 4-[5-(3,5-Dichlorphenyl)-4,5-dihydro-5-(trifluormethyl)-3-isoxazolyl]-2-methyl-N-(cis-1-oxido-3-thietanyl)benzamid, 4-[5-(3,5-Dichlorphenyl)-4,5-dihydro-5-(trifluormethyl)-3-isoxazolyl]-2-methyl-N-(trans-1-oxido-3-thietanyl)benzamid und 4-[(5S)-5-(3,5-Dichlorphenyl)-4,5-dihydro-5-(trifluormethyl)-3-isoxazolyl]-2-methyl-N-(cis-1-oxido-3-thietanyl)benzamid (bekannt aus WO 2013/050317 A1) (CAS 1332628-83-7), N-[3-Chlor-1-(3-pyridinyl)-1H-pyrazol-4-yl]-N-ethyl-3-[(3,3,3-trifluorpropyl)sulfmyl]propanamid, (+)-N-[3-Chlor-1-(3-pyridinyl)-1H-pyrazol-4-yl]-N-ethyl-3-[(3,3,3-trifluorpropyl)sulfinyl]propanamid und (-)-N-[3-Chlor-1-(3-pyridinyl)-1H-pyrazol-4-yl]-N-ethyl-3-[(3,3,3-trifluorpropyl)sulfinyl]propanamid (bekannt aus WO 2013/162715 A2, WO 2013/162716 A2, US 2014/0213448 A1) (CAS 1477923-37-7), 5-[[(2E)-3-Chlor-2-propen-1-yl]amino]-1-[2,6-dichlor-4-(trifluormethyl)phenyl]-4-[(trifluormethyl)sulfinyl]-1H-pyrazol-3-carbonitrile (bekannt aus CN 101337937 A) (CAS 1105672-77-2), 3-Brom-N-[4-chlor-2-methyl-6-[(methylamino)thioxomethyl]phenyl]-1-(3-chlor-2-pyridinyl)-1H-pyrazol-5-carboxamid, (Liudaibenjiaxuanan, bekannt aus CN 103109816 A) (CAS 1232543-85-9); N-[4-Chlor-2-[[(1,1-dimethylethyl)amino]carbonyl]-6-methylphenyl]-1-(3-chlor-2-pyridinyl)-3-(fluormethoxy)-1H-pyrazol-5-carboxamid (bekannt aus WO 2012/034403 A1) (CAS 1268277-22-0), N-[2-(5-Amino-1,3,4-thiadiazol-2-yl)-4-chlor-6-methylphenyl]-3-brom-1-(3-chlor-2-pyridinyl)-1H-pyrazol-5-carboxamid (bekannt aus WO 2011/085575 A1) (CAS 1233882-22-8), 4-[3-[2,6-Dichlor-4-[(3,3-dichlor-2-propen-1-yl)oxy]phenoxy]propoxy]-2-methoxy-6-(trifluormethyl)pyrimidin (bekannt aus CN 101337940 A) (CAS 1108184-52-6); (2E)- und 2(Z)-2-[2-(4-Cyanophenyl)-1-[3-(trifluormethyl)phenyl]ethyliden]-N-[4-(difluormethoxy)phenyl]hydrazincarboxamid (bekannt aus CN 101715774 A) (CAS 1232543-85-9); Cyclopropancarbonsäure-3-(2,2-dichlorethenyl)-2,2-dimethyl-4-(1H-benzimidazol-2-yl)phenylester (bekannt aus CN 103524422 A) (CAS 1542271-46-4); (4aS)-7-Chlor-2,5-dihydro-2-[[(methoxycarbonyl)[4-[(trifluormethyl)thio]phenyl]amino]carbonyl]indeno[1,2-e][1,3,4]oxadiazin-4a(3H)-carbonsäuremethylester (bekannt aus CN 102391261 A) (CAS 1370358-69-2); 6-Desoxy-3-O-ethyl-2,4-di-O-methyl-1-[N-[4-[1-[4-(1,1,2,2,2-pentafluorethoxy)phenyl]-1H-1,2,4-triazol-3-yl]phenyl]carbamat]-$\alpha$-L-mannopyranose (bekannt aus US 2014/0275503 A1) (CAS 1181213-14-8); 8-(2-Cyclopropylmethoxy-4-trifluormethylphenoxy)-3-(6-trifluormethylpyridazin-3-yl)-3-azabicyclo[3.2.1]octan (CAS 1253850-56-4), (8-anti)-8-(2-Cyclopropylmethoxy-4-trifluormethylphenoxy)-3-(6-trifluormethylpyridazin-3-yl)-3-azabicyclo[3.2.1]octan (CAS 933798-27-7), (8-syn)-8-(2-Cyclopropylmethoxy-4-trifluormethylphenoxy)-3-(6-trifluormethylpyridazin-3-yl)-3-azabicyclo[3.2.1]octan (bekannt aus WO 2007040280 A1, WO 2007040282 A1) (CAS 934001-66-8), N-[3-Chlor-1-(3-pyridinyl)-1H-pyrazol-4-yl]-N-ethyl-3-[(3,3,3-trifluorpropyl)thio]-propanamid (bekannt aus WO 2015/058021 A1, WO 2015/058028 A1) (CAS 1477919-27-9) und N-[4-(Aminothioxomethyl)-2-methyl-6-[(methylamino)carbonyl]phenyl] -3 -bromo-1 -(3 -chloro-2-pyridinyl)-1H-pyrazol-5-carboxamid (bekannt aus CN 103265527 A) (CAS 1452877-50-7), 5-(1,3-Dioxan-2-yl)-4-[[4-(trifluormethyl)phenyl]methoxy]-pyrimidin (bekannt aus WO 2013/115391 A1) (CAS 1449021-97-9), 3-(4-Chlor-2,6-dimethylphenyl)-8-methoxy-1-methyl-1,8-diazaspiro[4.5]decane-2,4-dion (bekannt aus WO 2014/187846 A1) (CAS 1638765-58-8), 3-(4-Chlor-2,6-dimethylphenyl)-8-methoxy-1-methyl-2-oxo-1,8-diazaspiro[4.5]dec-3-en-4-yl-carbonsäureethylester (bekannt aus WO 2010/066780 A1, WO 2011151146 A1) (CAS 1229023-00-0), 4-[(5S)-5-(3,5-Dichlor-4-fluorophenyl)-4,5-dihydro-5-(trifluoromethyl)-3-isoxazolyl]-N-[(4R)-2-ethyl-3-oxo-4-isoxazolidinyl]-2-methyl-benzamid (bekannt aus WO 2011/067272, WO2013/050302) (CAS 1309959-62-3).

Insektizide, die bevorzugt gemeinsam mit den Herbiziden eingesetzt werden können, sind beispielsweise folgende:
Acetamiprid, Acrinathrin, Aldicarb, Amitraz, Acinphos-methyl, Cyfluthrin, Carbaryl, Cypermethrin, Deltamethrin, Endosulfan, Ethoprophos, Fenamiphos, Fenthion, Fipronil, Imidacloprid, Methamidophos, Methiocarb, Niclosamide, Oxydemeton-methyl, Prothiophos, Silafluofen, Thiacloprid, Thiodicarb, Tralomethrin, Triazophos, Trichlorfon, Triflumuron, Terbufos, Fonofos, Phorate, Chlorpyriphos, Carbofuran, Tefluthrin.

Die erfindungsgemäßen Wirkstoffkombinationen sind zur Bekämpfung eines breiten Unkrautspektrums im Nichtkulturland, auf Wegen, Gleisanlagen, Industrieflächen ("industrial weed control") oder in Plantagenkulturen wie gemäßigten, subtropischen und tropischen Klimaten oder Geographien geeignet. Beispiele für Plantagenkulturen sind Ölpalme, Nüsse (z. B. Mandeln, Haselnüsse, Walnüsse, Macademia), Kokosnuss, Beeren, Ölpalme, Gummibaum,

Citrus (z. B. Orange, Zitrone, Mandarine), Bananen, Ananas, Baumwolle, Zuckerrohr, Tee, Kaffee, Kakao und Ähnliches. Ebenso sind sie für die Anwendung im Obstbau (z. B. Kernobst wie Apfel, Birne, Kirsche, Mango, Kiwi) und Weinbau geeignet. Die Mittel können auch zur Saatvorbereitung ("burn-down-" "no-till"- oder "zero-till"-Methode) oder zur Behandlung nach der Ernte ("chemical fallow") eingesetzt werden. Die Anwendungsmöglichkeiten der Wirkstoffkombinationen erstrecken sich auch zur Unkrautkontrolle in Baumkulturen, z. B. jungen Christbaumkulturen oder Eukalyptus-Anlagen, jeweils vor der Einpflanzung oder nach der Verpflanzung (auch mit Überkopfbehandlung, "over-top").

Auch können die Mittel in zur Bekämpfung von unerwünschtem Pflanzenwuchs in wirtschaftlich bedeutenden Kulturpflanzen wie Weizen (Hart- und Weichweizen), Mais, Soja, Zuckerrübe, Zuckerrohr, Baumwolle, Reis, Bohnen (wie beispielsweise Buschbohne und Pferdebohne), Flachs, Gerste, Hafer, Roggen, Triticale, Kartoffel und Hirse (Sorghum), Weideland und Grün-/Rasenflächen und Plantagenkulturen eingesetzt werden. Plantagenkulturen sind unteranderem Pomefruits (Apfel, Birne, Quitte), Ribes-Artige (Brombeere, Himbeere),Citrus, Prunus-Artige (Kirschen, Nektarinen, Mandeln), Nußfrüchte (Walnuß, Pecan, Haselnuß, Cashew, Macadamia), Mango, Kakao, Kaffee, Wein (Tafel-, Weintrauben), Palmen (wie Ölpalme, Dattelpalme,Kokospalme,) Eucalyptus, Kaki, Persimon, Kautschuk, Ananans, Banane, Avocado, Litschi, Forstkulturen (Eucalypteae, Piniaceae, Piceae, Meliaceae, etc. )

Die erfindungsgemäßen herbiziden Wirkstoffkombinationen in den jeweiligen Anwendungsformen (= herbiziden Mittel) weisen Synergien hinsichtlich der Herbizidwirkung und Selektivität und günstige Wirkung bezüglich des Unkrautspektums auf. Sie weisen eine ausgezeichnete herbizide Wirksamkeit gegen ein breites Spektrum wirtschaftlich wichtiger monokotyler und dikotyler annueller Schadpflanzen auf. Auch schwer bekämpfbare perennierende Schadpflanzen, die aus Rhizomen, Wurzelstöcken oder anderen Dauerorganen austreiben, werden durch die Wirkstoffe gut erfaßt.

Zur Anwendung können die Wirkstoffkombinationen auf die Pflanzen (z.B. Schadpflanzen wie mono- oder dikotyle Unkräuter oder unerwünschte Kulturpflanzen), das Saatgut (z.B. Körner, Samen oder vegetative Vermehrungsorgane wie Knollen oder Sprossteile mit Knospen) oder die Fläche, auf der die Pflanzen wachsen (z.B. die Anbaufläche), ausgebracht werden.

Dabei können die Substanzen im Vorsaat- (ggf. auch durch Einarbeitung in den Boden), Vorauflauf- oder Nachauflaufverfahren ausgebracht werden. Bevorzugt ist die Anwendung im frühen Nachsaat-Vorauflaufverfahren oder im Nachauflaufverfahren von Plantagenkulturen gegen noch nicht aufgelaufene oder bereits aufgelaufene Schadpflanzen. Die Anwendung kann auch in Unkrautmanagment-Systemen (weed-management) mit geteilten mehrfachen Anwendungen (Sequenzanwendungen, "sequentials") integriert werden.

Im Einzelnen seien beispielhaft einige Vertreter der mono- und dikotylen Unkrautflora genannt, die durch die erfindungsgemäßen Wirkstoffkombinationen kontrolliert werden können, ohne dass durch die Nennung eine Beschränkung auf bestimmte Arten erfolgen soll.

Auf der Seite der monokotylen Unkrautarten werden z.B. Aegilops, Agropyron, Agrostis, Alopecurus, Apera, Avena, Brachicaria, Bromus, Cynodon, Dactyloctenium, Digitaria, Echinochloa, Eleocharis, Eleusine, Eragrostis, Eriochloa, Festuca, Fimbristylis, Imperata, Ischaemum, Heteranthera, Imperata, Ischaemum, Leptochloa, Lolium, Monochoria, Panicum, Paspalum, Phalaris, Phleum, Poa, Rottboellia, Sagittaria, Scirpus, Setaria, Sorghum, Sphenoclea und Cyperus-arten von der annuellen Gruppe erfasst.

Bei dikotylen Unkrautarten erstreckt sich das Wirkungsspektrum auf Arten wie z.B. Abutilon, Amaranthus, Ambrosia, Anoda, Anthemis, Aphanes, Artemisia, Atriplex, Bellis, Bidens, Capsella, Carduus, Cassia, Centaurea, Chenopodium, Cirsium, Convolvulus, Datura, Desmodium, Emex, Erodium, Erysimum, Euphorbia, Galeopsis, Galinsoga, Galium, Geranium, Hibiscus, Ipomoea, Kochia, Lamium, Lepidium, Lindernia, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Solanum, Sonchus, Sphenoclea, Stellaria, Taraxacum, Thlaspi, Trifolium, Urtica, Veronica, Viola, Xanthium.

Werden die erfindungsgemäßen Wirkstoffkombinationen vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffe auf die grünen Pflanzenteile im Nachauflaufverfahren tritt nach der Behandlung ein Wachstumsstop ein und die Schadpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, dass die in den Kombinationen verwendeten und wirksamen Dosierungen von Verbindungen (A) und (B) so gering eingestellt werden können, dass ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäße Kombination von Wirkstoffen wird eine erhebliche Reduzierung der nötigen Aufwandmenge der Wirkstoffe ermöglicht.

Mit dem kombinierten Einsatz der Herbizide (A) und (B) werden anwendungstechnische Eigenschaften erreicht, die über das hinausgehen, was aufgrund der bekannten Eigenschaften der Einzelherbizide für deren Kombination zu erwarten war. Beispielsweise übertreffen die herbiziden Wirkungen bei einer bestimmten Schadpflanzenspezies den Erwartungswert, wie er nach Standardverfahren, z. B. gemäß Colby oder anderen Extrapolationsverfahren, abgeschätzt werden kann.

Ein synergistischer Effekt liegt immer dann vor, wenn die Wirkung, hier die herbizide Wirkung der Wirkstoffkombination größer ist als die Summe der Wirkungen der einzeln applizierten Wirkstoffe. Die zu erwartende Wirkung für eine gegebene Kombination zweier Wirkstoffe kann nach S.R. Colby ("Calculating Synergistic and Antagonistic Responses of Herbicide Combination", Weeds 15 (1967), 20-22) berechnet werden (siehe unten).

Die synergistischen Effekte erlauben daher beispielsweise eine Reduktion der Aufwandmengen der Einzelwirkstoffe, eine höhere Wirkungsstärke bei gleicher Aufwandmenge, die Kontrolle bislang nicht erfasster Arten von Schadpflanzen (Lücken), eine erhöhte Residualwirkung, eine erhöhte Langzeitwirkung, eine erhöhte Wirkungsgeschwindigkeit, eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Obgleich die erfindungsgemäßen Kombinationen eine ausgezeichnete herbizide Aktivität gegenüber mono- und dikotylen Unkräutern aufweisen, werden viele wirtschaftlich bedeutende Kulturpflanzen abhängig von der Struktur der jeweiligen erfindungsgemäßen Wirkstoffkombinationen und deren Aufwandmenge nur unwesentlich oder gar nicht geschädigt. Wirtschaftlich bedeutende Kulturen sind dabei z.B. dikotyle Kulturen der Gattungen Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, Vicia, oder monokotyle Kulturen der Gattungen Allium, Ananas, Asparagus, Avena, Hordeum, Oryza, Panicum, Saccharum, Secale, Sorghum, Triticale, Triticum und Zea.

Darüberhinaus weisen die erfindungsgemäßen Mittel teilweise hervorragende wachstumsregulatorische Eigenschaften bei den Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativem Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die Mittel zur Bekämpfung von Schadpflanzen in bekannten Pflanzenkulturen oder noch zu entwickelnden, durch konventionelle Mutagenese veränderten oder gentechnisch veränderten, toleranten Kulturpflanzen eingesetzt werden. Die transgenen Pflanzen zeichnen sich in der Regel durch besondere vorteilhafte Eigenschaften aus, neben den Resistenzen gegenüber den erfindungsgemäßen Mitteln beispielsweise durch Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt. Weitere besondere Eigenschaften können in einer Toleranz oder Resistenz gegen abiotische Stressoren z. B. Hitze, Kälte, Trockenheit, Salz und ultraviolette Strahlung liegen.

Vorzugsweise können die erfindungsgemäßen Wirkstoffkombinationen als Herbizide in Nutzpflanzenkulturen eingesetzt werden, welche gegenüber den phytotoxischen Wirkungen der Herbizide resistent sind bzw. gentechnisch resistent gemacht worden sind.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen

- gentechnische Veränderungen von Kulturpflanzen zwecks Modifikation der in den Pflanzen synthetisierten Stärke (z. B. WO 92/11376, WO 92/14827,
  WO 91/19806),
- transgene Kulturpflanzen, welche Resistenzen gegen andere Herbizide aufweisen, beispielsweise gegen Sulfonylharnstoffe (EP-A-0257993, US-A-5013659),
- transgene Kulturpflanzen, mit der Fähigkeit

  Bacillus thuringiensis-Toxine (Bt-Toxine) zu produzieren, welche die Pflanzen gegen bestimmte Schädlinge resistent machen (EP-A-0142924, EP-A-0193259).

- transgene Kulturpflanzen mit modifizierter Fettsäurezusammensetzung (WO 91/13972).
- gentechnisch veränderte Kulturpflanzen mit neuen Inhalts- oder Sekundärstoffen z. B. neuen Phytoalexinen, die eine erhöhte Krankheitsresistenz verursachen (EPA 309862, EPA0464461)
- gentechnisch veränderte Pflanzen mit reduzierter Photorespiration, die höhere Erträge und höhere Stresstoleranz aufweisen (EPA 0305398).
- Transgene Kulturpflanzen, die pharmazeutisch oder diagnostisch wichtige Proteine produzieren ("molecular pharming")
- transgene Kulturpflanzen, die sich durch höhere Erträge oder bessere Qualität auszeichnen
- transgene Kulturpflanzen die sich durch eine Kombinationen z. B. der o. g. neuen Eigenschaften auszeichnen ("gene stacking")

Zahlreiche molekularbiologische Techniken, mit denen neue transgene Pflanzen mit veränderten Eigenschaften hergestellt werden können, sind im Prinzip bekannt; siehe z. B. I. Potrykus und G. Spangenberg (eds.) Gene Transfer to Plants, Springer Lab Manual (1995), Springer Verlag Berlin, Heidelberg. oder Christou, "Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe von Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden, siehe z. B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106). Die Expression der Nukleinsäuremoleküle kann auch in den Organellen der Pflanzenzellen stattfinden.

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen. So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Vorzugsweise können die erfindungsgemäßen Wirkstoffkombinationen in transgenen Kulturen eingesetzt werden, welche gegen die eingesetzten Wirkstoffe tolerant sind bzw. tolerant gemacht worden sind.

Vorzugsweise können die erfindungsgemäßen Wirkstoffkombinationen auch in transgenen Kulturen eingesetzt werden, welche gegen Wuchsstoffe, wie z. B. Dicamba oder gegen Herbizide, die essentielle Pflanzenenzyme, z. B. Acetolactatsynthasen (ALS), EPSP Synthasen, Glutaminsynthasen (GS) oder Hydoxyphenylpyruvat Dioxygenasen (HPPD) hemmen, respektive gegen Herbizide aus der Gruppe der Sulfonylharnstoffe, der Glyphosate, Glufosinate oder Benzoylisoxazole und analogen Wirkstoffe, resistent sind.

Gegenstand der Erfindung ist deshalb auch ein Verfahren zur Bekämpfung von unerwünschtem Pflanzenwuchs, gegebenenfalls in Nutzpflanzenkulturen, vorzugsweise im Nichtkulturland oder in Plantagenkulturen, dadurch gekennzeichnet, dass man ein oder mehrere Herbizide des Typs (A) mit einem oder mehreren Herbiziden des Typs (B) auf die Schadpflanzen, Pflanzenteile oder Pflanzensamen (Saatgut) davon oder die Anbaufläche appliziert.

Gegenstand der Erfindung ist auch die Verwendung der neuen Kombinationen aus Verbindungen (A)+(B) zur Bekämpfung von Schadpflanzen, gegebenenfalls in Nutzpflanzenkulturen, vorzugsweise in Nichtkulturland und Plantagenkulturen, aber auch zur Bekämpfung von Schadpflanzen vor der Aussaat der folgenden Nutzpflanze, wie insbesondere zur Saatvorbereitung ("burn-down Anwendung").

Die erfindungsgemäßen Wirkstoffkombinationen können sowohl als Mischformulierungen der zwei Komponenten, gegebenenfalls mit weiteren Wirkstoffen, Zusatzstoffen und/oder üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Verbindungen (A) und (B) oder deren Kombinationen können auf verschiedene Art formuliert werden, je nachdem welche biologischen und/oder chemisch-physikalischen Parameter vorgegeben sind. Als allgemeine Formulierungsmöglichkeiten kommen beispielsweise in Frage: Spritzpulver (WP), wasserlösliche Pulver (SP), emulgierbare Konzentrate (EC), wasserlösliche Konzentrate, wäßrige Lösungen (SL), Emulsionen (EW) wie Öl-in-Wasser- und Wasser-in-Öl-Emulsionen, versprühbare Lösungen oder Emulsionen, Dispersionen auf Öl- oder Wasserbasis, Öldispersionen (OD), Suspoemulsionen, Suspensionskonzentrate (SC), ölmischbare Lösungen, Kapselsuspensionen (CS), Stäubemittel (DP), Beizmittel, Granulate zur Boden- oder Streuapplikation, Granulate (GR) in Form von Mikro-, Sprüh-, Aufzugs- und Adsorptionsgranulaten, wasserdispergierbare Granulate (WG), wasserlösliche Granulate (SG), ULV-Formulierungen, Mikrokapseln oder Wachse.

Gegenstand der Erfindung sind deshalb auch herbizide und pflanzenwachstumsregulierende Mittel, welche die erfindungsgemäßen Wirkstoffkombinationen enthalten.

Die einzelnen Formulierungstypen sind im Prinzip bekannt und werden beispielsweise beschrieben in: Winnacker-Küchler, "Chemische Technologie", Band 7, C. Hanser Verlag München, 4. Aufl. 1986; van Valkenburg, "Pesticides Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1963; McCutcheon's, "Detergents and Emulsifiers Annual", MC Publ. Corp., Ridegewood N.J.; Sisley and Wood, "Encyclopedia of Surface Active Egents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hanser Verlag München, 4. Aufl. 1986.

Auf der Basis dieser Formulierungen lassen sich auch Kombinationen mit anderen pestizid wirksamen Stoffen, wie anderen Herbiziden, Fungiziden, Insektiziden oder anderen Schädlingsbekämpfungsmitteln (z. B. Akarizide, Nematizide, Molluskizide, Rodentizide, Aphizide, Avizide, Larvizide, Ovizide, Bakterizide, Viruzide, etc.), sowie Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Wirkstoff außer einem Verdünnungs- oder Inertstoff noch Tenside ionischer und/oder nichtionischer Art (Netzmittel, Dispergiermittel), z.B. polyoxethylierte Alkylphenole, polyoxethylierte Fettalkohole, polyoxethylierte Fettamine, Fettalkoholpolyglykolethersulfate, Alkansulfonate, Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten. Zur Herstellung der Spritzpulver werden die herbiziden Wirkstoffe beispielsweise in üblichen Apparaturen wie Hammermühlen, Gebläsemühlen und Luftstrahlmühlen feingemahlen und gleichzeitig oder anschließend mit den Formulierungshilfsmitteln vermischt.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe oder Mischungen der organischen Lösungsmittel unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanester wie z.B. Sorbitanfettsäureester oder wie z. B. Polyoxyethylensorbitanfettsäureester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Suspensionskonzentrate können auf Wasser- oder Ölbasis sein. Sie können beispielsweise durch Naß-Vermahlung mittels handelsüblicher Perlmühlen und gegebenenfalls Zusatz von Tensiden, wie sie z.B. oben bei den anderen Formulierungstypen bereits aufgeführt sind, hergestellt werden.

Emulsionen, z.B. Öl-in-Wasser-Emulsionen (EW), lassen sich beispielsweise mittels Rührern, Kolloidmühlen und/oder statischen Mischern unter Verwendung von wäßrigen organischen Lösungsmitteln und gegebenenfalls Tensiden, wie sie z.B. oben bei den anderen Formulierungstypen bereits aufgeführt sind, herstellen.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Wasserdispergierbare Granulate werden in der Regel nach Verfahren wie Sprühtrocknung, Wirbelbett-Granulierung, Teller-Granulierung, Mischung mit Hochgeschwindigkeitsmischern und Extrusion ohne festes Inertmaterial hergestellt.

Die agrochemischen Zubereitungen enthalten in der Regel 0,1 bis 99 Gewichtsprozent, insbesondere 0,2 bis 95 Gew.-%, Wirkstoffe der Typen (A) und/oder (B), wobei je nach Formulierungsart folgende Konzentrationen üblich sind: In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration etwa 1 bis 90 Gew.-%, betragen, vorzugsweise 5 bis 80 Gewichtsprozent.

Staubförmige Formulierungen enthalten meistens 5 bis 20 Gew.-% an Wirkstoff, versprühbare Lösungen enthalten etwa 0.05 bis 80, vorzugsweise 2 bis 50 Gewichtsprozent (Gew.-%) Wirkstoff.

Bei Granulaten wie dispergierbaren Granulaten hängt der Wirkstoffgehalt zum Teil davon ab, ob die wirksame Verbindung flüssig oder fest vorliegt und welche Granulierhilsmittel und Füllstoffe verwendet werden. In der Regel liegt der Gehalt bei den in Wasser dispergierbaren Granulaten zwischen 1 und 95 Gew.-%, vorzugsweise zwischen 10 und 80 Gew.-%.

Daneben enthalten die genannten Wirkstofformulierungen gegebenenfalls die jeweils üblichen Haft-, Netz-, Dispergier-, Emulgier-, Penetrations-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden.

Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen Kombination an Wirkstoffen (A) und (B) hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

A. Formulierungsbeispiele allgemeiner Art

a) Ein Stäubemittel wird erhalten, indem man 10 Gewichsteile (= Gew.-Teile) eines Wirkstoffs (A) oder (B) oder eines Wirkstoffgemischs (A) + (B) (und gegebenenfalls weiterer Wirkstoffkomponenten) und/oder deren Salze und 90 Gew.-Teile Talkum als Inertstoff mischt und in einer Schlagmühle zerkleinert.

b) Ein in Wasser leicht dispergierbares, benetzbares Pulver wird erhalten, indem man 25 Gew.-Teile eines Wirkstoffs/Wirkstoffgemischs, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile eines Wirkstoffs/Wirkstoffgemischs mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z.B. ca. 255 bis 277 °C) mischt und in einer Reibkugelmühle auf eine Feinheit von unter 5 Mikron vermahlt.

d) Ein emulgierbares Konzentrat wird erhalten aus 15 Gew.-Teilen eines Wirkstoffs/Wirkstoffgemischs, 75 Gew.-Teilen Cyclohexanon als Lösemittel und 10 Gew.-Teilen oxethyliertem Nonylphenol als Emulgator.

e) Ein in Wasser dispergierbares Granulat wird erhalten indem man

75 Gew.-Teile eines Wirkstoffs/Wirkstoffgemischs,
10 Gew.-Teile ligninsulfonsaures Calcium,

5 Gew.-Teile Natriumlaurylsulfat,
3 Gew.-Teile Polyvinylalkohol und
7 Gew.-Teile Kaolin
mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

25 Gew.-Teile eines Wirkstoffs/Wirkstoffgemischs,
5 Gew.-Teile 2,2'-dinaphthylmethan-6,6'-disulfonsaures Natrium,
2 Gew.-Teile oleoylmethyltaurinsaures Natrium,
1 Gew.-Teil Polyvinylalkohol,
17 Gew.-Teile Calciumcarbonat und
50 Gew.-Teile Wasser

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

B. Biologische Beispiele

Bei der Anwendung der erfindungsgemäßen Kombinationen werden häufig herbizide Wirkungen an einer Schadpflanzenspezies beobachtet, die die formale Summe der Wirkungen der enthaltenen Herbizide bei alleiniger Applikation übertreffen. Alternativ kann in manchen Fällen beobachtet werden, dass eine geringere Aufwandmenge für die Herbizid-Kombination benötigt wird, um im Vergleich zu den Einzelpräparaten dieselbe Wirkung bei einer Schadpflanzenspezies zu erzielen. Derartige Wirkungssteigerungen bzw. Effektivitätssteigerungen oder Einsparungen an Aufwandmenge sind ein starker Hinweis auf synergistische Wirkung.

Wenn die beobachteten Wirkungswerte bereits die formale Summe der Werte zu den Versuchen mit Einzeapplikationen übertreffen, dann übertreffen sie den Erwartungswert nach Colby ebenfalls, der sich nach folgender Formel errechnet und ebenfalls als Hinweis auf Synergismus angesehen wird (vgl. S. R. Colby; in Weeds 15 (1967) S. 20 bis 22):

$$E^C = A + B - (A \cdot B/100)$$

Dabei bedeuten:

A = Wirkung des Wirkstoffs (A) in % bei einer Aufwandmenge von a g a.i./ha;
B = Wirkung des Wirkstoffs (B) in % bei einer Aufwandmenge von b g a.i./ha;
$E^C$ = Erwartungswert der Wirkung der Kombination (A)+(B) in % bei der kombinierten Aufwandmenge a+b g a.i./ha.

Die beobachteten Werte ($E^A$) der Versuche zeigen bei geeigneten niedrigen Dosierungen eine Wirkung der Kombinationen, die über den Erwartungswerten nach Colby liegen (Δ).

1. Unkrautwirkung im Nachauflauf

Samen bzw. Rhizomstücke von mono- und dikotylen Unkräutern werden in Töpfen in sandigem Lehmboden ausgelegt, mit Erde abgedeckt und im Gewächshaus unter guten Wachstumsbedingungen (Temperatur, Luftfeuchtigkeit, Wasserversorgung) angezogen. Drei Wochen nach der Aussaat werden die Versuchspflanzen im Dreiblattstadium mit den erfindungsgemäßen Mitteln behandelt. Die als Spritzpulver bzw. als Emulsionskonzentrate formulierten erfindungsgemäßen Mittel werden in verschiedenen Dosierungen mit einer Wasseraufwandmenge von umgerechnet 300 bis 800 l/ha auf die grünen Pflanzenteile gesprüht. Nach ca. 3 bis 4 Wochen Standzeit der Versuchspflanzen im Gewächshaus unter optimalen Wachstumsbedingungen wird die Wirkung der Präparate optisch im Vergleich zu unbehandelten Kontrollen bonitiert. Die erfindungsgemäßen Mittel weisen auch im Nachauflauf eine gute herbizide Wirksamkeit gegen ein breites Spektrum wirtschaftlich wichtiger Ungräser und Unkräuter auf.

Dabei werden häufig Wirkungen der erfindungsgemäßen Kombinationen beobachtet, die die formale Summe der Wirkungen bei Einzelapplikation der Herbizide übertreffen. Die beobachteten Werte der Versuche zeigen bei geeigneten niedrigen Dosierungen eine Wirkung der Kombinationen, die über den Erwartungswerten nach Colby liegen.

2. Herbizide Wirkung im Vor- und Nachauflauf (Feldversuche)

Entsprechend den Gewächshausversuchen des Abschnitts 1 wurden die Versuche auf Parzellen in Freiland durchgeführt. Die Bonitur erfolgte analog dem Versuch in Abschnitt 1.

3. Herbizide Wirkung und Kulturpflanzenverträglichkeit (Feldversuche)

Kulturpflanzen wurden im Freiland auf Parzellen unter natürlichen Freilandbedingungen herangezogen, wobei Samen oder Rhizomstücke von typischen Schadpflanzen ausgelegt worden waren bzw. die natürliche Verunkrautung genutzt wurde. Die Behandlung mit den erfindungsgemäßen Mitteln erfolgte nach dem Auflaufen der Schadpflanzen und der Kulturpflanzen in der Regel im 2 bis 4-Blattstadium; teilweise (wie angegeben) erfolgte die Applikation einzelner Wirkstoffe oder Wirkstoffkombinationen preemergent oder als Sequenzbehandlung teilweise preemergent und/oder postemergent.

Im Falle von Plantagenkulturen wurde in der Regel nur der Boden zwischen den einzelnen Kulturpflanzen mit den Wirkstoffen behandelt.

Nach der Anwendung, z. B. 2, 4, 6 und 8 Wochen nach Applikation wurde die Wirkung der Präparate optisch im Vergleich zu unbehandelten Kontrollen bonitiert. Die erfindungsgemäßen Mittel weisen auch im Feldversuch eine synergistische herbizide Wirksamkeit gegen ein breites Spektrum wirtschaftlich wichtiger Ungräser und Unkräuter auf. Der Vergleich zeigte, dass die erfindungsgemäßen Kombinationen meist mehr, teilweise erheblich mehr herbizide Wirkung aufweisen als die Summe der Wirkungen der Einzelherbizide und weist deshalb auf einen Synergismus hin. Außerdem lagen die Wirkungen in wesentlichen Abschnitten des Boniturzeitraums über den Erwartungswerten nach Colby und weisen deshalb ebenfalls auf einen Synergismus hin. Die Kulturpflanzen dagegen wurden infolge der Behandlungen mit den herbiziden Mitteln nicht oder nur unwesentlich geschädigt.

4. Spezielle Versuchsbeispiele

Folgenden Abkürzungen werden in der Beschreibung und den nachfolgenden Tabellen verwendet: g a.i./ha = Gramm Aktivsubstanz (active ingredient) (= 100% Wirkstoff) pro Hektar;

Die Summe der Wirkungen der Einzelapplikationen ist unter $E^A$ angegeben; Erwartungswerte nach Colby sind jeweils unter $E^C$ angegeben;

Die biologischen Ergebnisse der erfindungsgemäßen Zusammensetzungen sind in den Tabellen 3.1 -3.2 zusammengefasst. Der Boniturzeitraum ist in Tagen nach der Applikation (DAT) angegeben.

Tabelle 3.1: Synergistischer Effekt (Δ) für herbizide binäre Zusammensetzungen im Nachauflauf enthaltend Herbizide aus der Gruppe B2

| Wirkstoffe (Z5) | Aufwandmenge [g a.i./ha] | Herbizide Wirkung 21 DAT [%] gegen *Setaria viridis* |
|---|---|---|
| (B2.18) Diflufenican | 90<br>30 | 20<br>10 |
| A1 | 5<br>1,7 | 90<br>85 |
| A1 + (B2.18) Diflufenican | 5 + 90<br>1,7 + 90<br>5 + 30<br>1,7 + 30 | $E^A$ = 97 ($E^C$ = 92) Δ 5<br>$E^A$ = 98 ($E^C$ = 88) Δ 10<br>$E^A$ = 97 ($E^C$ = 91) Δ 6<br>$E^A$ = 95 ($E^C$ = 86,5) Δ 8 |

| Wirkstoffe (Z5) | Aufwandmenge [g a.i./ha] | Herbizide Wirkung 21 DAT [%] gegen *Abutilon theophrasti* |
|---|---|---|
| (B2.18) Diflufenican | 270<br>90<br>30 | 30<br>20<br>20 |
| A1 | 5 | 60 |

(fortgesetzt)

| Wirkstoffe (Z5) | Aufwandmenge [g a.i./ha] | Herbizide Wirkung 21 DAT [%] gegen *Abutilon theophrasti* |
|---|---|---|
| A1 + (B2.18) Diflufenican | 5 + 270<br>5 + 90<br>5 + 30 | $E^A$ = 85 ($E^C$ = 72) Δ 13<br>$E^A$ = 85 ($E^C$ = 68) Δ 17<br>$E^A$ = 85 ($E^C$ = 68) Δ 17 |

| Wirkstoffe (Z5) | Aufwandmenge [g a.i./ha] | Herbizide Wirkung 21 DAT [%] gegen *Kochia Scoparia* |
|---|---|---|
| (B2.18) Diflufenican | 270<br>90<br>30 | 25<br>20<br>10 |
| A1 | 45<br>15<br>5 | 85<br>80<br>75 |
| A1 + (B2.18) Diflufenican | 45 + 270<br>15 + 270<br>5 + 270<br>15 + 90<br>5 + 90<br>45 + 30<br>15 + 30<br>5 + 30 | $E^A$ = 95 ($E^C$ = 88) Δ 6<br>$E^A$ = 95 ($E^C$ = 85) Δ 10<br>$E^A$ = 93 ($E^C$ = 81) Δ 11<br>$E^A$ = 93 ($E^C$ = 84) Δ 9<br>$E^A$ = 90 ($E^C$ = 80) Δ 10<br>$E^A$ = 93 ($E^C$ = 86) Δ 6<br>$E^A$ = 90 ($E^C$ = 82) Δ 8<br>$E^A$ = 85 ($E^C$ = 77) Δ 7 |

| Wirkstoffe (Z5) | Aufwandmenge [g a.i./ha] | Herbizide Wirkung 21 DAT [%] gegen *Ipomoea purpurea* |
|---|---|---|
| (B2.18) Diflufenican | 270<br>30 | 60<br>30 |
| A1 | 15<br>5 | 80<br>80 |
| A1 + (B2.18) Diflufenican | 15 + 270<br>15 + 30<br>5 + 30 | $E^A$ = 99 ($E^C$ = 92) Δ 7<br>$E^A$ = 97 ($E^C$ = 86) Δ 11<br>$E^A$ = 93 ($E^C$ = 86) Δ 7 |

| Wirkstoffe (Z5) | Aufwandmenge [g a.i. / ha] | Herbizide Wirkung 14 DAT [%] gegen *Alopecurus myosuroides* |
|---|---|---|
| A1 | 16<br>4 | 85<br>80 |
| (B2.18) Diflufenican | 90<br>30 | 20<br>20 |
| A1 + (B2.18) Diflufenican | 16 + 90<br>4 + 90<br>4 + 30 | $E^A$ = 93 ($E^C$ = 88) Δ = 5<br>$E^A$ = 90 ($E^C$ = 84) Δ = 6<br>$E^A$ = 93 ($E^C$ = 84) Δ = 9 |

| Wirkstoffe (Z5) | Aufwandmenge [g a.i. / ha] | Herbizide Wirkung 28 DAT [%] gegen *Alopecurus myosuroides* |
|---|---|---|
| A1 | 4 | 85 |
| (B2.18) Diflufenican | 270 | 20 |
| A1 + (B2.18) Diflufenican | 4 + 270 | $E^A$ = 95 ($E^C$ = 88) Δ = 7 |

| Wirkstoffe (Z5) | Aufwandmenge [g a.i. / ha] | Herbizide Wirkung 14 DAT [%] gegen *Lolium rigidum* |
|---|---|---|
| A1 | 4 | 70 |
| (B2.18) Diflufenican | 270 90 | 20 20 |
| A1 + (B2.18) Diflufenican | 4 + 270<br>4 + 90 | $E^A$ = 85 ($E^C$ = 76) Δ = 9<br>$E^A$ = 90 ($E^C$ = 76) Δ = 14 |

| Wirkstoffe (Z5) | Aufwandmenge [g a.i. / ha] | Herbizide Wirkung 28 DAT [%] gegen *Lolium rigidum* |
|---|---|---|
| A1 | 4 | 75 |
| (B2.18) Diflufenican | 270 | 30 |
| A1 + (B2.18) Diflufenican | 4 + 270 | $E^A$ = 93 ($E^C$ = 83) Δ = 10 |

| Wirkstoffe (Z5) | Aufwandmenge [g a.i. / ha] | Herbizide Wirkung 14 DAT [%] gegen *Matricaria inodora* |
|---|---|---|
| A1 | 4 | 70 |
| (B2.18) Diflufenican | 270 | 30 |
| A1 + (B2.18) Diflufenican | 4 + 270 | $E^A$ = 90 ($E^C$ = 79) Δ = 11 |

| Wirkstoff/e (Z5) | Aufwandmenge [g a.i. / ha] | Herbizide Wirkung 28 DAT [%] gegen *Matricaria inodora* |
|---|---|---|
| A1 | 16 | 85 |
| (B2.18) Diflufenican | 270 | 20 |
| A1 + (B2.18) Diflufenican | 16+270 | $E^A$ = 97 ($E^C$ = 88) Δ = 9 |

| Wirkstoff/e (Z5) | Aufwandmenge [g a.i. / ha] | Herbizide Wirkung 14 DAT [%] gegen *Phalaris minor* |
|---|---|---|
| A1 | 4 1 | 75 30 |
| (B2.18) Diflufenican | 30<br>270 | 20<br>30 |
| A1 + (B2.18) Diflufenican | 4 + 30<br>1 + 270 | $E^A$ = 85 ($E^C$ = 80) Δ = 5<br>$E^A$ = 75 ($E^C$ = 51) Δ = 24 |

| Wirkstoff/e (Z5) | Aufwandmenge [g a.i. / ha] | Herbizide Wirkung 28 DAT [%] gegen *Phalaris minor* |
|---|---|---|
| A1 | 16<br>4 | 85<br>70 |
| (B2.18) Diflufenican | 270<br>90<br>30 | 30<br>10<br>10 |
| A1 + (B2.18) Diflufenican | 16 + 270<br>16 + 90<br>16 + 30<br>4 + 270<br>4 + 90<br>4 + 30 | $E^A$ = 95 ($E^C$ = 90) Δ = 5<br>$E^A$ = 95 ($E^C$ = 87) Δ = 8<br>$E^A$ = 95 ($E^C$ = 87) Δ = 8<br>$E^A$ = 95 ($E^C$ = 79) Δ = 16<br>$E^A$ = 93 ($E^C$ = 73) Δ = 20<br>$E^A$ = 93 ($E^C$ = 73) Δ = 20 |

| Wirkstoff/e (Z5) | Aufwandmenge [g a.i. / ha] | Herbizide Wirkung 14 DAT [%] gegen *Poa annua L.* |
|---|---|---|
| A1 | 16<br>4 | 80<br>80 |
| (B2.18) Diflufenican | 90 | 20 |
| A1 + (B2.18) Diflufenican | 16 + 90<br>4 + 90 | $E^A$ = 90 ($E^C$ = 84) Δ = 6<br>$E^A$ = 90 ($E^C$ = 84) Δ = 6 |

| Wirkstoff/e (Z5) | Aufwandmenge [g a.i. / ha] | Herbizide Wirkung 28 DAT [%] gegen *Poa annua L.* |
|---|---|---|
| A1 | 4<br>1 | 85<br>30 |
| (B2.18) Diflufenican | 270<br>90<br>30 | 30<br>20<br>10 |
| A1 + (B2.18) Diflufenican | 4 + 270<br>4 + 90<br>4 + 30<br>1 + 270<br>1 + 90 | $E^A$ = 97 ($E^C$ = 90) Δ = 7<br>$E^A$ = 97 ($E^C$ = 88) Δ = 9<br>$E^A$ = 97 ($E^C$ = 87) Δ = 10<br>$E^A$ = 60 ($E^C$ = 51) Δ = 9<br>$E^A$ = 50 ($E^C$ = 44) Δ = 6 |

| Wirkstoff/e (Z5) | Aufwandmenge [g a.i. / ha] | Herbizide Wirkung 14 DAT [%] gegen *Veronica hederifolia* |
|---|---|---|
| A1 | 1 | 30 |
| (B2.18) Diflufenican | 270 | 30 |
| A1 + (B2.18) Diflufenican | 1 + 270 | $E^A$ = 60 ($E^C$ = 51) Δ = 9 |

| Wirkstoff/e (Z5) | Aufwandmenge [g a.i. / ha] | Herbizide Wirkung 28 DAT [%] gegen *Veronica hederifolia* |
|---|---|---|
| A1 | 4 | 40 |

(fortgesetzt)

| Wirkstoff/e (Z5) | Aufwandmenge [g a.i. / ha] | Herbizide Wirkung 28 DAT [%] gegen *Veronica hederifolia* |
|---|---|---|
| (B2.18) Diflufenican | 270<br>90<br>30 | 30<br>20<br>20 |
| A1 + (B2.18) Diflufenican | 4 + 270<br>4 + 90<br>4 + 30 | $E^A$ = 85 ($E^C$ = 58) Δ = 27<br>$E^A$ = 60 ($E^C$ = 52) Δ = 8<br>$E^A$ = 70 ($E^C$ = 52) Δ = 18 |

Tabelle 3.2: Synergistischer Effekt (Δ) für herbizide binäre Zusammensetzungen im Nachauflauf enthaltend Herbizide aus der Gruppe B7

| Wirkstoff/e (Z25) | Aufwandmenge [g a.i./ha] | Herbizide Wirkung 21 DAT [%] gegen *Kochia Scoparia* |
|---|---|---|
| (B7.4) Glufosinate [CAS 77182-82-2] | 150<br>50 | 50<br>10 |
| A1 | 15<br>5 | 80<br>75 |
| A1 + (B7.4) Glufosinate [CAS 77182-82-2] | 5 + 150<br>15 + 50<br>5 + 50 | $E^A$ = 93 ($E^C$ = 87) Δ 5<br>$E^A$ = 90 ($E^C$ = 82) Δ 8<br>$E^A$ = 90 ($E^C$ = 77) Δ 12 |

| Wirkstoff/e (Z25) | Aufwandmenge [g a.i./ha] | Herbizide Wirkung 21 DAT [%] gegen *Abutilon theophrasti* |
|---|---|---|
| (B7.4) Glufosinate [CAS 77182-82-2] | 50 | 50 |
| A1 | 5 | 60 |
| A1 + (B7.4) Glufosinate [CAS 77182-82-2] | 5 + 50 | $E^A$ = 90 ($E^C$ = 80) Δ 10 |

| Wirkstoff/e (Z25) | Aufwandmenge [g a.i./ha] | Herbizide Wirkung 21 DAT [%] gegen *Amaranthus palmeri* |
|---|---|---|
| (B7.4) Glufosinate [CAS 77182-82-2] | 150<br>50 | 90<br>35 |
| A1 | 15<br>5 | 40<br>30 |
| A1 + (B7.4) Glufosinate [CAS 77182-82-2] | 15 + 150<br>5 + 150<br>5 + 50 | $E^A$ = 100 ($E^C$ = 94) Δ 6<br>$E^A$ = 100 ($E^C$ = 93) Δ 7<br>$E^A$ = 60 ($E^C$ = 54) Δ 5 |

| Wirkstoff/e (Z25) | Aufwandmenge [g a.i. / ha] | Herbizide Wirkung 14 DAT [%] gegen *Centaurea cyanus* |
|---|---|---|
| A1 | 1 | 10 |

(fortgesetzt)

| Wirkstoff/e (Z25) | Aufwandmenge [g a.i. / ha] | Herbizide Wirkung 14 DAT [%] gegen *Centaurea cyanus* |
|---|---|---|
| (B7.4) Glufosinate [CAS 77182-82-2] | 540<br>180 | 85<br>60 |
| A1 + (B7.4) Glufosinate [CAS 77182-82-2] | 1 + 540<br>1 + 180 | $E^A$ = 95 ($E^C$ = 87) Δ = 8<br>$E^A$ = 70 ($E^C$ = 64) Δ = 6 |

| Wirkstoff/e (Z25) | Aufwandmenge [g a.i. / ha] | Herbizide Wirkung 28 DAT [%] gegen *Centaurea cyanus* |
|---|---|---|
| A1 | 1 | 10 |
| (B7.4) Glufosinate [CAS 77182-82-2] | 540<br>180 | 70<br>30 |
| A1 + (B7.4) Glufosinate [CAS 77182-82-2] | 1 + 540<br>1 + 180 | $E^A$ = 95 ($E^C$ = 73) Δ = 22<br>$E^A$ = 50 ($E^C$ = 37) Δ = 13 |

| Wirkstoff/e (Z25) | Aufwandmenge [g a.i. / ha] | Herbizide Wirkung 14 DAT [%] gegen *Lolium rigidum* |
|---|---|---|
| A1 | 16 | 80 |
| (B7.4) Glufosinate [CAS 77182-82-2] | 180 | 40 |
| A1 + (B7.4) Glufosinate [CAS 77182-82-2] | 16+180 | $E^A$ = 93 ($E^C$ = 88) Δ = 5 |

| Wirkstoffe (Z25) | Aufwandmenge [g a.i. / ha] | Herbizide Wirkung 28 DAT [%] gegen *Lolium rigidum* |
|---|---|---|
| A1 | 4<br>1 | 75<br>30 |
| (B7.4) Glufosinate [CAS 77182-82-2] | 540 | 40 |
| A1 + (B7.4) Glufosinate [CAS 77182-82-2] | 4 + 540<br>1 + 540 | $E^A$ = 97 ($E^C$ = 85) Δ = 12<br>$E^A$ = 70 ($E^C$ = 58) Δ = 12 |

| Wirkstoffe (Z25) | Aufwandmenge [g a.i. / ha] | Herbizide Wirkung 14 DAT [%] gegen *Lolium rigidum* (resistenter Biotyp) |
|---|---|---|
| A1 | 1 | 20 |
| (B7.4) Glufosinate [CAS 77182-82-2] | 540 | 50 |
| A1 + (B7.4) Glufosinate [CAS 77182-82-2] | 1 + 540 | $E^A$ = 80 ($E^C$ = 60) Δ = 20 |

| Wirkstoffe (Z25) | Aufwandmenge [g a.i. / ha] | Herbizide Wirkung 28 DAT [%] gegen *Lolium rigidum* (resistenter Biotyp) |
|---|---|---|
| A1 | 4<br>1 | 40<br>20 |
| (B7.4) Glufosinate [CAS 77182-82-2] | 540 | 30 |
| A1 + (B7.4) Glufosinate [CAS 77182-82-2] | 4 + 540<br>1 + 540 | $E^A$ = 70 ($E^C$ = 58) Δ = 12<br>$E^A$ = 50 ($E^C$ = 44) Δ = 6 |

| Wirkstoffe (Z25) | Aufwandmenge [g a.i. / ha] | Herbizide Wirkung 28 DAT [%] gegen *Matricaria inodora* |
|---|---|---|
| A1 | 16<br>1 | 85<br>50 |
| (B7.4) Glufosinate [CAS 77182-82-2] | 180 | 60 |
| A1 + (B7.4) Glufosinate [CAS 77182-82-2] | 16+180<br>1 + 180 | $E^A$ = 100 ($E^C$ = 94) Δ = 6<br>$E^A$ = 99 ($E^C$ = 80) Δ = 19 |

| Wirkstoffe (Z25) | Aufwandmenge [g a.i. / ha] | Herbizide Wirkung 14 DAT [%] gegen *Phalaris minor* |
|---|---|---|
| A1 | 4<br>1 | 75<br>30 |
| (B7.4) Glufosinate [CAS 77182-82-2] | 60 540 | 20 60 |
| A1 + (B7.4) Glufosinate [CAS 77182-82-2] | 4 + 60<br>1 + 540 | $E^A$ = 90 ($E^C$ = 80) Δ = 10<br>$E^A$ = 80 ($E^C$ = 72) Δ = 8 |

| Wirkstoff/e (Z25) | Aufwandmenge [g a.i. / ha] | Herbizide Wirkung 28 DAT [%] gegen *Phalaris minor* |
|---|---|---|
| A1 | 16<br>4 | 85<br>70 |
| (B7.4) Glufosinate [CAS 77182-82-2] | 540<br>180<br>60 | 40<br>30<br>10 |
| A1 + (B7.4) Glufosinate [CAS 77182-82-2] | 16 + 540<br>16 + 180<br>16 + 60<br>4 + 60 | $E^A$ = 97 ($E^C$ = 91) Δ = 6<br>$E^A$ = 95 ($E^C$ = 90) Δ = 5<br>$E^A$ = 95 ($E^C$ = 87) Δ = 8<br>$E^A$ = 80 ($E^C$ = 73) Δ = 7 |

| Wirkstoff/e (Z25) | Aufwandmenge [g a.i. / ha] | Herbizide Wirkung 28 DAT [%] gegen *Poa annua L.* |
|---|---|---|
| A1 | 4 | 85 |
| (B7.4) Glufosinate [CAS 77182-82-2] | 180 | 20 |

(fortgesetzt)

| Wirkstoff/e (Z25) | Aufwandmenge [g a.i. / ha] | Herbizide Wirkung 28 DAT [%] gegen *Poa annua L.* |
|---|---|---|
| A1 + (B7.4) Glufosinate [CAS 77182-82-2] | 4 + 180 | $E^A$ = 95 ($E^C$ = 88) Δ = 7 |

| Wirkstoff/e (Z25) | Aufwandmenge [g a.i. / ha] | Herbizide Wirkung 14 DAT [%] gegen *Veronica hederifolia* |
|---|---|---|
| A1 | 16 | 70 |
| (B7.4) Glufosinate [CAS 77182-82-2] | 60 | 50 |
| A1 + (B7.4) Glufosinate [CAS 77182-82-2] | 16 + 60 | $E^A$ = 97 ($E^C$ = 85) Δ = 12 |

| Wirkstoff/e (Z26) | Aufwandmenge [g a.i./ha] | Herbizide Wirkung 45 DAT [%] gegen *Amaranthus tuberculatus* |
|---|---|---|
| (B7.5) Glyphosate [CAS 38641-94-0] | 720 | 15 |
| A1 | 100 | 57 |
| A1 + (B7.5) Glyphosate [CAS 38641-94-0] | 100 + 720 | $E^A$ = 73 ($E^C$ = 63) Δ 10 |

| Wirkstoff/e (Z26) | Aufwandmenge [g a.i./ha] | Herbizide Wirkung 45 DAT [%] gegen *Ipomoea ssp* |
|---|---|---|
| (B7.5) Glyphosate [CAS 38641-94-0] | 720 | 0 |
| A1 | 100 | 57 |
| A1 + (B7.5) Glyphosate [CAS 38641-94-0] | 100 + 720 | $E^A$ = 70 ($E^C$ = 57) Δ 13 |

| Wirkstoff/e (Z26) | Aufwandmenge [g a.i./ha] | Herbizide Wirkung 16 DAT [%] gegen *Richardia scabra* |
|---|---|---|
| (B7.5) Glyphosate [CAS 38641-94-0] | 720 | 62 |
| A1 | 100 | 48 |
| A1 + (B7.5) Glyphosate [CAS 38641-94-0] | 100 + 720 | $E^A$ = 92 ($E^C$ = 80) Δ 12 |

| Wirkstoff/e (Z26) | Aufwandmenge [g a.i./ha] | Herbizide Wirkung 42 DAT [%] gegen *Geranium dissectum* |
|---|---|---|
| (B7.5) Glyphosate [CAS 38641-94-0] | 720 | 50 |
| A1 | 100 | 17 |

(fortgesetzt)

| Wirkstoff/e (Z26) | Aufwandmenge [g a.i./ha] | Herbizide Wirkung 42 DAT [%] gegen *Geranium dissectum* |
|---|---|---|
| A1 + (B7.5) Glyphosate [CAS 38641-94-0] | 100 + 720 | $E^A$ = 100 ($E^C$ = 59) Δ 41.5 |

| Wirkstoff/e (Z26) | Aufwandmenge [g a.i./ha] | Herbizide Wirkung 45 DAT [%] gegen *Lysimachia nummularia* |
|---|---|---|
| (B7.5) Glyphosate [CAS 38641-94-0] | 720 | 7 |
| A1 | 100 | 25 |
| A1 + (B7.5) Glyphosate [CAS 38641-94-0] | 100 + 720 | $E^A$ = 60 ($E^C$ = 30) Δ 30 |

| Wirkstoff/e (Z26) | Aufwandmenge [g a.i./ha] | Herbizide Wirkung 42 DAT [%] gegen *Malva pusilla* |
|---|---|---|
| (B7.5) Glyphosate [CAS 38641-94-0] | 720 | 0 |
| A1 | 100 | 0 |
| A1 + (B7.5) Glyphosate [CAS 38641-94-0] | 100 + 720 | $E^A$ = 100 ($E^C$ = 0) Δ 100 |

| Wirkstoff/e (Z26) | Aufwandmenge [g a.i./ha] | Herbizide Wirkung 21 DAT [%] gegen *Amaranthus palmeri* |
|---|---|---|
| (B7.5) Glyphosate [CAS 38641-94-0] | 50 | 60 |
| A1 | 5 | 30 |
| A1 + (B7.5) Glyphosate [CAS 38641-94-0] | 5 + 50 | $E^A$ = 85 ($E^C$ = 72) Δ 13 |

| Wirkstoff/e (Z26) | Aufwandmenge [g a.i./ha] | Herbizide Wirkung 21 DAT [%] gegen *Kochia Scoparia* |
|---|---|---|
| (B7.5) Glyphosate [CAS 38641-94-0] | 150 | 20 |
| A1 | 15 | 80 |
| A1 + (B7.5) Glyphosate [CAS 38641-94-0] | 15 + 150 | $E^A$ = 90 ($E^C$ = 84) Δ 6 |

| Wirkstoff/e (Z26) | Aufwandmenge [g a.i. / ha] | Herbizide Wirkung 28 DAT [%] gegen *Bromus sterilis* |
|---|---|---|
| A1 | 1 | 30 |
| (B7.5) Glyphosate [CAS 38641-94-0] | 450<br>150 | 90<br>80 |

(fortgesetzt)

| Wirkstoff/e (Z26) | Aufwandmenge [g a.i. / ha] | Herbizide Wirkung 28 DAT [%] gegen *Bromus sterilis* |
|---|---|---|
| A1 + (B7.5) Glyphosate [CAS 38641-94-0] | 1 + 450<br>1 + 150 | $E^A$ = 98 ($E^C$ = 93) Δ = 5<br>$E^A$ = 93 ($E^C$ = 86) Δ = 7 |

| Wirkstoff/e (Z26) | Aufwandmenge [g a.i. / ha] | Herbizide Wirkung 14 DAT [%] gegen *Centaurea cyanus* |
|---|---|---|
| A1 | 16<br>4<br>1 | 40<br>30<br>10 |
| (B7.5) Glyphosate [CAS 38641-94-0] | 450<br>150 | 60<br>50 |
| A1 + (B7.5) Glyphosate [CAS 38641-94-0] | 16+450<br>16+150<br>4 + 450<br>4 + 150<br>1 + 450<br>1 + 150 | $E^A$ 90 ($E^C$ 76) Δ = 14<br>$E^A$ 75 ($E^C$ 70) Δ = 5<br>$E^A$ = 85 ($E^C$ = 72) Δ = 13<br>$E^A$ = 80 ($E^C$ = 65) Δ = 15<br>$E^A$ = 80 ($E^C$ = 64) Δ = 16<br>$E^A$ = 75 ($E^C$ = 55) Δ = 20 |

| Wirkstoff/e (Z26) | Aufwandmenge [g a.i. / ha] | Herbizide Wirkung 28 DAT [%] gegen *Centaurea cyanus* |
|---|---|---|
| A1 | 16<br>4<br>1 | 50<br>30<br>10 |
| (B7.5) Glyphosate [CAS 38641-94-0] | 450<br>150<br>50 | 60<br>40<br>10 |
| A1 + (B7.5) Glyphosate [CAS 38641-94-0] | 16 + 450<br>4 + 150<br>1 + 450<br>1 + 150<br>1 + 50 | $E^A$ = 95 ($E^C$ = 80) Δ = 15<br>$E^A$ = 80 ($E^C$ = 58) Δ = 22<br>$E^A$ = 85 ($E^C$ = 64) Δ = 21<br>$E^A$ = 70 ($E^C$ = 46) Δ = 24<br>$E^A$ = 40 ($E^C$ = 19) Δ = 21 |

| Wirkstoff/e (Z26) | Aufwandmenge [g a.i. / ha] | Herbizide Wirkung 28 DAT [%] gegen *Lolium rigidum* |
|---|---|---|
| A1 | 1 | 30 |
| (B7.5) Glyphosate [CAS 38641-94-0] | 150 | 30 |
| A1 + (B7.5) Glyphosate [CAS 38641-94-0] | 1 + 150 | $E^A$ = 60 ($E^C$ = 51) Δ = 9 |

| Wirkstoff/e (Z26) | Aufwandmenge [g a.i. / ha] | Herbizide Wirkung 28 DAT [%] gegen *Lolium rigidum* (resistenter Biotyp) |
|---|---|---|
| A1 | 4 | 40 |
| (B7.5) Glyphosate [CAS 38641-94-0] | 450 | 70 |
| A1 + (B7.5) Glyphosate [CAS 38641-94-0] | 4 + 450 | $E^A$ = 95 ($E^C$ = 82) Δ = 13 |

| Wirkstoff/e (Z26) | Aufwandmenge [g a.i. / ha] | Herbizide Wirkung 28 DAT [%] gegen *Matricaria inodora* |
|---|---|---|
| A1 | 1 | 50 |
| (B7.5) Glyphosate [CAS 38641-94-0] | 150 | 70 |
| A1 + (B7.5) Glyphosate [CAS 38641-94-0] | 1 + 150 | $E^A$ = 90 ($E^C$ = 85) Δ = 5 |

| Wirkstoff/e (Z26) | Aufwandmenge [g a.i. / ha] | Herbizide Wirkung 28 DAT [%] gegen *Phalaris minor* |
|---|---|---|
| A1 | 16 | 85 |
| (B7.5) Glyphosate [CAS 38641-94-0] | 50 | 30 |
| A1 + (B7.5) Glyphosate [CAS 38641-94-0] | 16 + 50 | $E^A$ = 95 ($E^C$ = 90) Δ = 5 |

| Wirkstoff/e (Z26) | Aufwandmenge [g a.i. / ha] | Herbizide Wirkung 28 DAT [%] gegen *Poa annua L.* |
|---|---|---|
| A1 | 1 | 30 |
| (B7.5) Glyphosate [CAS 38641-94-0] | 450 | 85 |
| A1 + Glyphosate [CAS 38641-94-0] | 1 + 450 | $E^A$ = 98 ($E^C$ = 90) Δ = 8 |

Weitere biologische Ergebnisse der erfindungsgemäßen Zusammensetzungen sind in den Tabellen 3.3 - 3.4 zusammengefasst. Der Boniturzeitraum ist in Tagen nach der Applikation (DAT) angegeben.

Tabelle 3.3: Synergistischer Effekt (Δ) für herbizide binäre Zusammensetzungen im Nachauflauf enthaltend das Herbizid A1

| Wirkstoff | Aufwandmenge g a.i. / ha | Herbizide Wirkung 28 DAT gegen Centaurea cyanus |
|---|---|---|
| A1 | 4<br>1 | 50<br>40 |
| (B3.1) Bromoxynil | 50<br>450 | 30<br>70 |

(fortgesetzt)

| Wirkstoff | Aufwandmenge g a.i. / ha | Herbizide Wirkung 28 DAT gegen Centaurea cyanus |
|---|---|---|
| A1 + (B3.1) Bromoxynil | 4 + 50<br>1 + 450<br>1 + 50 | $E^A$ = 80 ($E^C$ = 65) Δ = 15<br>$E^A$ = 98 ($E^C$ = 82) Δ = 16<br>$E^A$ = 65 ($E^C$ = 58) Δ = 7 |

| Wirkstoff | Aufwandmenge g a.i. / ha | Herbizide Wirkung 28 DAT gegen Lolium rigidum |
|---|---|---|
| A1 | 4 | 50 |
| (B3.1) Bromoxynil | 450 | 20 |
| | 150 | 15 |
| A1 + (B3.1) Bromoxynil | 4 + 450<br>4 + 150 | $E^A$ = 65 ($E^C$ = 60) Δ = 5<br>$E^A$ = 85 ($E^C$ = 58) Δ = 27 |

| Wirkstoff | Aufwandmenge g a.i. / ha | Herbizide Wirkung 28 DAT gegen Lolium rigidum (resistenter Biotyp) |
|---|---|---|
| A1 | 1 | 5 |
| (B3.1) Bromoxynil | 150<br>50 | 0<br>0 |
| A1 + (B3.1) Bromoxynil | 1 + 150<br>1 + 50 | $E^A$ = 10 ($E^C$ = 5) Δ = 5<br>$E^A$ = 10($E^C$ = 5) Δ = 5 |

| Wirkstoff | Aufwandmenge g a.i. / ha | Herbizide Wirkung 28 DAT gegen Lolium rigidum (resistenter Biotyp) |
|---|---|---|
| A1 | 16 | 80 |
| (B3.1) Bromoxynil | 450<br>50 | 25<br>0 |
| A1 + (B3.1) Bromoxynil | 16 + 450<br>16 + 50 | $E^A$ = 93 ($E^C$ = 85) Δ = 8<br>$E^A$ = 85 ($E^C$ = 80) Δ = 5 |

| Wirkstoff | Aufwandmenge g a.i. / ha | Herbizide Wirkung 28 DAT gegen Poa annua L. |
|---|---|---|
| A1 | 16<br>1 | 75<br>20 |
| (B3.1) Bromoxynil | 450<br>150<br>50 | 25<br>0<br>0 |
| A1 + (B3.1) Bromoxynil | 16 + 450<br>16 + 150<br>16 + 50<br>1 + 150 | $E^A$ = 97($E^C$ = 81) Δ = 16<br>$E^A$ = 85 ($E^C$ = 75) Δ = 10<br>$E^A$ = 97 ($E^C$ = 75) Δ = 22<br>$E^A$ = 35 ($E^C$ = 20) Δ = 15 |

| Wirkstoff | Aufwandmenge g a.i. / ha | Herbizide Wirkung 28 DAT gegen Veronica hederifolia |
|---|---|---|
| A1 | 1 | 80 |
| (B3.1) Bromoxynil | 150 | 20 |
| A1 + (B3.1) Bromoxynil | 1 + 150 | $E^A$ = 93 ($E^C$ = 84) Δ = 9 |

| Wirkstoff | Aufwandmenge g a.i. / ha | Herbizide Wirkung 28 DAT gegen Viola tricolor |
|---|---|---|
| A1 | 16 | 75 |
| (B3.1) Bromoxynil | 450 | 40 |
| A1 + (B3.1) Bromoxynil | 16 + 450 | $E^A$ = 90 ($E^C$ = 85) Δ = 5 |

| Wirkstoff | Aufwandmenge g a.i. / ha | Herbizide Wirkung 28 DAT gegen Bromus sterilis |
|---|---|---|
| A1 | 4 | 70 |
| (B2.28) Flufenacet | 100 | 40 |
| A1 + (B2.28) Flufenacet | 4 + 100 | $E^A$ = 90 ($E^C$ = 82) Δ = 8 |

| Wirkstoff | Aufwandmenge g a.i. / ha | Herbizide Wirkung 28 DAT gegen Lolium rigidum (resistenter Biotyp) |
|---|---|---|
| A1 | 4 | 50 |
| (B2.28) Flufenacet | 100<br>33 | 65<br>15 |
| A1 + (B2.28) Flufenacet | 4 + 100<br>4 + 33 | $E^A$ = 93 ($E^C$ = 83) Δ = 10<br>$E^A$ = 95 ($E^C$ = 58) Δ = 37 |

| Wirkstoff | Aufwandmenge g a.i. / ha | Herbizide Wirkung 28 DAT gegen Matricaria inodora |
|---|---|---|
| A1 | 16<br>1 | 80<br>30 |
| (B2.28) Flufenacet | 300<br>100<br>33 | 40<br>20<br>15 |
| A1 + (B2.28) Flufenacet | 16 + 300<br>16 + 100<br>16 + 33<br>1 + 300<br>1 + 100<br>1 +33 | $E^A$ = 95 ($E^C$ = 88) Δ = 7<br>$E^A$ = 95 ($E^C$ = 84) Δ = 11<br>$E^A$ = 95 ($E^C$ = 83) Δ = 12<br>$E^A$ = 65 ($E^C$ = 58) Δ = 7<br>$E^A$ = 60 ($E^C$ = 44) Δ = 16<br>$E^A$ = 75 $E^C$ = 41) Δ = 34 |

| Wirkstoff | Aufwandmenge g a.i. / ha | Herbizide Wirkung 28 DAT gegen Poa annua L. |
|---|---|---|
| A1 | 16 | 75 |

(fortgesetzt)

| Wirkstoff | Aufwandmenge g a.i. / ha | Herbizide Wirkung 28 DAT gegen Poa annua L. |
|---|---|---|
| (B2.28) Flufenacet | 33 | 20 |
| A1 + (B2.28) Flufenacet | 16 + 33 | $E^A$ = 95 ($E^C$ = 80) Δ = 15 |

| Wirkstoff | Aufwandmenge g a.i. / ha | Herbizide Wirkung 28 DAT gegen Veronica hederifolia |
|---|---|---|
| A1 | 1 | 80 |
| (B2.28) Flufenacet | 100 | 50 |
| A1 + (B2.28) Flufenacet | 1 + 100 | $E^A$ = 95 ($E^C$ = 90) Δ = 5 |

| Wirkstoff | Aufwandmenge g a.i. / ha | Herbizide Wirkung 28 DAT gegen Viola tricolor |
|---|---|---|
| A1 | 16<br>1 | 75<br>50 |
| (B2.28) Flufenacet | 300<br>100<br>33 | 50<br>20<br>15 |
| A1 + (B2.28) Flufenacet | 16 + 300<br>16 + 100<br>16 + 33<br>1 + 100<br>1 + 33 | $E^A$ = 95 ($E^C$ = 88) Δ = 7<br>$E^A$ = 85 ($E^C$ = 80) Δ = 5<br>$E^A$ = 97 ($E^C$ = 79) Δ = 18<br>$E^A$ = 80 ($E^C$ = 60) Δ = 20<br>$E^A$ = 65 ($E^C$ = 58) Δ = 7 |

| Wirkstoff | Aufwandmenge g a.i. / ha | Herbizide Wirkung 28 DAT gegen Matricaria inodora |
|---|---|---|
| A1 | 1 | 30 |
| (B2.31) Foramsulfuron | 9 | 65 |
| A1 + (B2.31) Foramsulfuron | 1 + 9 | $E^A$ = 85 ($E^C$ = 76) Δ = 9 |

| Wirkstoff | Aufwandmenge g a.i. / ha | Herbizide Wirkung 28 DAT gegen Phalaris minor |
|---|---|---|
| A1 | 16<br>4<br>1 | 80<br>80<br>20 |
| (B2.31) Foramsulfuron | 1<br>9 | 25<br>85 |
| A1 + (B2.31) Foramsulfuron | 16 + 1<br>4 + 1<br>1 + 9 | $E^A$ = 95 ($E^C$ = 85) Δ = 10<br>$E^A$ = 90 ($E^C$ = 85) Δ = 5<br>$E^A$ = 95 ($E^C$ = 88) Δ = 7 |

| Wirkstoff | Aufwandmenge g a.i. / ha | Herbizide Wirkung 28 DAT gegen Lolium rigidum |
|---|---|---|
| A1 | 4 | 50 |

(fortgesetzt)

| Wirkstoff | Aufwandmenge g a.i. / ha | Herbizide Wirkung 28 DAT gegen Lolium rigidum |
|---|---|---|
| (B5.31) Halauxifen | 9<br>3<br>1 | 25<br>0<br>0 |
| A1 + (B5.31) Halauxifen | 4+9<br>4 + 3<br>4 + 1 | $E^A$ = 70 ($E^C$ = 63) Δ = 7<br>$E^A$ = 80 ($E^C$ = 50) Δ = 30<br>$E^A$ = 65 ($E^C$ = 50) Δ = 15 |

| Wirkstoff | Aufwandmenge g a.i. / ha | Herbizide Wirkung 28 DAT gegen Lolium rigidum (resistenter Biotyp) |
|---|---|---|
| A1 | 16<br>1 | 30<br>5 |
| (B5.31) Halauxifen | 1 | 0 |
| A1 + (B5.31) Halauxifen | 16 + 1<br>1 + 1 | $E^A$ = 35 ($E^C$ = 30) Δ = 5<br>$E^A$ = 15 ($E^C$ = 5) Δ = 10 |

| Wirkstoff | Aufwandmenge g a.i. / ha | Herbizide Wirkung 28 DAT gegen Matricaria inodora |
|---|---|---|
| A1 | 1 | 30 |
| (B5.31) Halauxifen | 3 | 70 |
| A1 + (B5.31) Halauxifen | 1 + 3 | $E^A$ = 90 ($E^C$ = 79) Δ = 11 |

| Wirkstoff | Aufwandmenge g a.i. / ha | Herbizide Wirkung 28 DAT gegen Phalaris minor |
|---|---|---|
| A1 | 16 | 80 |
| (B5.31) Halauxifen | 9<br>3<br>1 | 15<br>10<br>0 |
| A1 + (B5.31) Halauxifen | 16 + 9<br>16 + 3<br>16 + 1 | $E^A$ = 95 ($E^C$ = 83) Δ = 12<br>$E^A$ = 95 ($E^C$ = 82) Δ = 13<br>$E^A$ = 95 ($E^C$ = 80) Δ = 15 |

| Wirkstoff | Aufwandmenge g a.i. / ha | Herbizide Wirkung 28 DAT gegen Poa annua L. |
|---|---|---|
| A1 | 16<br>1 | 75<br>20 |
| (B5.31) Halauxifen | 9<br>3<br>1 | 15<br>10<br>0 |

(fortgesetzt)

| Wirkstoff | Aufwandmenge g a.i. / ha | Herbizide Wirkung 28 DAT gegen Poa annua L. |
|---|---|---|
| A1 + (B5.31) Halauxifen | 16 + 9<br>16 + 3<br>16 + 1<br>1 + 1 | $E^A$ = 95 ($E^C$ = 79) Δ = 16<br>$E^A$ = 90 ($E^C$ = 78) Δ = 12<br>$E^A$ = 90 ($E^C$ = 75) Δ = 15<br>$E^A$ = 35 (v = 20) Δ = 15 |

| Wirkstoff | Aufwandmenge g a.i. / ha | Herbizide Wirkung 28 DAT gegen Bromus sterilis |
|---|---|---|
| A1 | 4 | 70 |
| (B11.6) Indaziflam | 12 | 25 |
| A1 + (B11.6) Indaziflam | 4 + 12 | $E^A$ = 90 ($E^C$ = 78) Δ = 12 |

| Wirkstoff | Aufwandmenge g a.i. / ha | Herbizide Wirkung 28 DAT gegen Lamium purpureum L. |
|---|---|---|
| A1 | 1 | 80 |
| (B11.6) Indaziflam | 4 | 35 |
| A1 + (B11.6) Indaziflam | 1 + 4 | $E^A$ = 97 ($E^C$ = 87) Δ = 10 |

| Wirkstoff | Aufwandmenge g a.i. / ha | Herbizide Wirkung 28 DAT gegen Lolium rigidum |
|---|---|---|
| A1 | 4 | 50 |
| (B1 1.6) Indaziflam | 12<br>4 | 20<br>30 |
| A1 + (B11.6) Indaziflam | 4 + 12<br>4 + 4 | $E^A$ = 80 ($E^C$ = 60) Δ = 20<br>$E^A$ = 95 ($E^C$ = 65) Δ = 30 |

| Wirkstoff | Aufwandmenge g a.i. / ha | Herbizide Wirkung 28 DAT gegen Lolium rigidum (resistenter Biotyp) |
|---|---|---|
| A1 | 16<br>4<br>1 | 30<br>20<br>5 |
| (B11.6) Indaziflam | 36<br>12 | 35<br>30 |
| A1 + (B11.6) Indaziflam | 16 + 36<br>4 + 12<br>1 + 36 | $E^A$ = 65 ($E^C$ = 55) Δ = 10<br>$E^A$ = 60 ($E^C$ = 44) Δ = 16<br>$E^A$ = 70 ($E^C$ = 38) Δ = 32 |

| Wirkstoff | Aufwandmenge g a.i. / ha | Herbizide Wirkung 28 DAT gegen Matricaria inodora |
|---|---|---|
| A1 | 16<br>1 | 80<br>30 |
| (B11.6) Indaziflam | 4 | 65 |

(fortgesetzt)

| Wirkstoff | Aufwandmenge g a.i. / ha | Herbizide Wirkung 28 DAT gegen Matricaria inodora |
|---|---|---|
| A1 + (B11.6) Indaziflam | 16 + 4<br>1 + 4 | $E^A$ = 98 ($E^C$ = 93) Δ = 5<br>$E^A$ = 95 ($E^C$ = 76) Δ = 19 |

| Wirkstoff | Aufwandmenge g a.i. / ha | Herbizide Wirkung 28 DAT gegen Phalaris minor |
|---|---|---|
| A1 | 16<br>4 | 80<br>80 |
| (B11.6) Indaziflam | 36<br>4 | 60<br>0 |
| A1 + (B11.6) Indaziflam | 16 + 36<br>16 + 4 | $E^A$ = 97 ($E^C$ = 92) Δ = 5<br>$E^A$ = 95 ($E^C$ = 80) Δ = 15 |
| | 4 + 36 | $E^A$ = 100 ($E^C$ = 92) Δ = 8 |

| Wirkstoff | Aufwandmenge g a.i. / ha | Herbizide Wirkung 28 DAT gegen Poa annua L. |
|---|---|---|
| A1 | 16<br>1 | 75<br>20 |
| (B11.6) Indaziflam | 4 | 20 |
| A1 + (B11.6) Indaziflam | 16 + 4<br>1 + 4 | $E^A$ = 85 ($E^C$ = 80) Δ = 5<br>$E^A$ = 50 ($E^C$ = 36) Δ = 14 |

| Wirkstoff | Aufwandmenge g a.i. / ha | Herbizide Wirkung 28 DAT gegen Viola tricolor |
|---|---|---|
| A1 | 1 | 50 |
| (B2.37) Mesosulfuron | 15 | 80 |
| A1 + (B2.37) Mesosulfuron | 1 + 15 | $E^A$ = 97 ($E^C$ = 90) Δ = 7 |

| Wirkstoff | Aufwandmenge g a.i. / ha | Herbizide Wirkung 28 DAT gegen Alopecurus myosuroides |
|---|---|---|
| A1 | 1 | 15 |
| (B2.58) Propyzamide | 100 | 0 |
| A1 + (B2.58) Propyzamide | 1 + 100 | $E^A$ = 20 ($E^C$ = 15) Δ = 5 |

| Wirkstoff | Aufwandmenge g a.i. / ha | Herbizide Wirkung 28 DAT gegen Bromus sterilis |
|---|---|---|
| A1 | 4<br>1 | 60<br>25 |
| (B2.58) Propyzamide | 900<br>300 | 30<br>15 |

(fortgesetzt)

| Wirkstoff | Aufwandmenge g a.i. / ha | Herbizide Wirkung 28 DAT gegen Bromus sterilis |
|---|---|---|
| A1 + (B2.58) Propyzamide | 4 + 900<br>4 + 300<br>1 + 900 | $E^A$ = 97 ($E^C$ = 72) Δ = 25<br>$E^A$ = 85 ($E^C$ = 66) Δ = 19<br>$E^A$ = 70 ($E^C$ = 48) Δ = 22 |

| Wirkstoff | Aufwandmenge g a.i. / ha | Herbizide Wirkung 28 DAT gegen Centaurea cyanus |
|---|---|---|
| A1 | 1 | 0 |
| (B2.58) Propyzamide | 900<br>100 | 15<br>10 |
| A1 + (B2.58) Propyzamide | 1 + 900<br>1 + 100 | $E^A$ = 30 ($E^C$ = 15) Δ = 15<br>$E^A$ = 15 ($E^C$ = 10) Δ = 5 |

| Wirkstoff | Aufwandmenge g a.i. / ha | Herbizide Wirkung 28 DAT gegen Galium aparine |
|---|---|---|
| A1 | 16<br>1 | 80<br>20 |
| (B2.58) Propyzamide | 300<br>900<br>100 | 20<br>20<br>10 |
| A1 + (B2.58) Propyzamide | 16 + 300<br>1 + 900<br>1 + 300<br>1 + 100 | $E^A$ = 93 ($E^C$ = 84) Δ = 9<br>$E^A$ = 93 ($E^C$ = 36) Δ = 57<br>$E^A$ = 80 ($E^C$ = 36) Δ = 44<br>$E^A$ = 70 ($E^C$ = 28) Δ = 42 |

| Wirkstoff | Aufwandmenge g a.i. / ha | Herbizide Wirkung 28 DAT gegen Matricaria inodora |
|---|---|---|
| A1 | 16<br>4 | 65<br>40 |
| (B2.58) Propyzamide | 900<br>300<br>100 | 15<br>0<br>0 |
| A1 + (B2.58) Propyzamide | 16 + 900<br>16 + 300<br>16 + 100<br>4 + 900<br>4 + 300<br>4 + 100 | $E^A$ = 80 ($E^C$ = 70) Δ = 10<br>$E^A$ = 98 ($E^C$ = 65) Δ = 33<br>$E^A$ = 80 ($E^C$ = 65) Δ = 15<br>$E^A$ = 80 ($E^C$ = 49) Δ = 31<br>$E^A$ = 85 ($E^C$ = 40) Δ = 45<br>$E^A$ = 60 ($E^C$ = 40) Δ = 20 |

| Wirkstoff | Aufwandmenge g a.i. / ha | Herbizide Wirkung 28 DAT gegen Phalaris minor |
|---|---|---|
| A1 | 4<br>1 | 65<br>25 |

(fortgesetzt)

| Wirkstoff | Aufwandmenge g a.i. / ha | Herbizide Wirkung 28 DAT gegen Phalaris minor |
|---|---|---|
| (B2.58) Propyzamide | 300<br>900 | 20<br>30 |
| A1 + (B2.58) Propyzamide | 4 + 300<br>1 + 900 | $E^A$ = 95 ($E^C$ = 72) Δ = 23<br>$E^A$ = 65 ($E^C$ = 48) Δ = 17 |

| Wirkstoff | Aufwandmenge g a.i. / ha | Herbizide Wirkung 28 DAT gegen Poa annua L. |
|---|---|---|
| A1 | 4<br>1 | 70<br>30 |
| (B2.58) Propyzamide | 300<br>100 | 50<br>15 |
| A1 + (B2.58) Propyzamide | 4 + 300<br>4 + 100<br>1 + 100 | $E^A$ = 98 ($E^C$ = 85) Δ = 13<br>$E^A$ = 98 ($E^C$ = 75) Δ = 23<br>$E^A$ = 65 ($E^C$ = 41) Δ = 24 |

| Wirkstoff | Aufwandmenge g a.i. / ha | Herbizide Wirkung 28 DAT gegen Veronica hederifolia |
|---|---|---|
| A1 | 16<br>4<br>1 | 90<br>85<br>15 |
| (B2.58) Propyzamide | 100<br>900<br>300 | 0<br>40<br>80 |
| A1 + (B2.58) Propyzamide | 16 + 100<br>4 + 100<br>1 + 900<br>1 + 300<br>1 + 100 | $E^A$ = 95 ($E^C$ = 90) Δ = 5<br>$E^A$ = 90 ($E^C$ = 85) Δ = 5<br>$E^A$ = 90 ($E^C$ = 49) Δ = 41<br>$E^A$ = 90 ($E^C$ = 83) Δ = 7<br>$E^A$ = 30 ($E^C$ = 15) Δ = 15 |

| Wirkstoff | Aufwandmenge g a.i. / ha | Herbizide Wirkung 28 DAT gegen Viola tricolor |
|---|---|---|
| A1 | 16<br>4<br>1 | 70<br>50<br>15 |
| (B2.58) | 900 | 0 |
| | 300 | 20 |
| A1 + (B2.58) Propyzamide | 16 + 900<br>16 + 300<br>4 + 900<br>1 + 900 | $E^A$ = 95 ($E^C$ = 70) Δ = 25<br>$E^A$ = 95 ($E^C$ = 76) Δ = 19<br>$E^A$ = 95 ($E^C$ = 50) Δ = 45<br>$E^A$ = 95 ($E^C$ = 15) Δ = 80 |

| Wirkstoff | Aufwandmenge g a.i. / ha | Herbizide Wirkung 28 DAT gegen Bromus sterilis |
|---|---|---|
| A1 | 4<br>1 | 60<br>25 |
| (B4.22) Pyrasulfotole | 45<br>15 | 20<br>10 |
| A1 + (B4.22) Pyrasulfotole | 4 + 45<br>4 + 15<br>1 + 45<br>1 + 15 | $E^A$ = 90 ($E^C$ = 68) Δ = 22<br>$E^A$ = 80 ($E^C$ = 64) Δ = 16<br>$E^A$ = 55 ($E^C$ = 40) Δ = 15<br>$E^A$ = 50 ($E^C$ = 33) Δ = 17 |

| Wirkstoff | Aufwandmenge g a.i. / ha | Herbizide Wirkung 28 DAT gegen Centaurea cyanus |
|---|---|---|
| A1 | 4<br>1 | 15<br>0 |
| (B4.22) Pyrasulfotole | 5<br>45<br>15 | 0<br>15<br>10 |
| A1 + (B4.22) Pyrasulfotole | 4 + 5<br>1 + 45<br>1 + 15<br>1 + 5 | $E^A$ = 25 ($E^C$ = 15) Δ = 10<br>$E^A$ = 30 ($E^C$ = 15) Δ = 15<br>$E^A$ = 15 ($E^C$ = 10) Δ = 5<br>$E^A$ = 25 ($E^C$ = 0) Δ = 25 |

| Wirkstoff | Aufwandmenge g a.i. / ha | Herbizide Wirkung 28 DAT gegen Galium aparine |
|---|---|---|
| A1 | 1 | 20 |
| (B4.22) Pyrasulfotole | 45<br>15<br>5 | 60<br>0<br>0 |
| A1 + (B4.22) Pyrasulfotole | 1 + 45<br>1 + 15<br>1 + 5 | $E^A$ = 95 ($E^C$ = 68) Δ = 27<br>$E^A$ = 40 ($E^C$ = 20) Δ = 20<br>$E^A$ = 35 ($E^C$ = 20) Δ = 15 |

| Wirkstoff | Aufwandmenge g a.i. / ha | Herbizide Wirkung 28 DAT gegen Lolium rigidum (resistenter Biotyp) |
|---|---|---|
| A1 | 16 | 40 |
| (B4.22) Pyrasulfotole | 15<br>5 | 0<br>0 |
| A1 + (B4.22) Pyrasulfotole | 16 + 15<br>16 + 5 | $E^A$ = 50 ($E^C$ = 40) Δ = 10<br>$E^A$ = 60 ($E^C$ = 40) Δ = 20 |

| Wirkstoff | Aufwandmenge g a.i. / ha | Herbizide Wirkung 28 DAT gegen Matricaria inodora |
|---|---|---|
| A1 | 16<br>4 | 65<br>40 |

(fortgesetzt)

| Wirkstoff | Aufwandmenge g a.i. / ha | Herbizide Wirkung 28 DAT gegen Matricaria inodora |
|---|---|---|
| (B4.22) Pyrasulfotole | 45<br>15 | 15<br>0 |
| | 5 | 0 |
| A1 + (B4.22) Pyrasulfotole | 16 + 45<br>16 + 15<br>16 + 5<br>4 + 45<br>4 + 15<br>4 + 5 | $E^A$ = 98 ($E^C$ = 70) Δ = 28<br>$E^A$ = 80 $E^C$ = 65) Δ = 15<br>$E^A$ = 80 ($E^C$ = 65) Δ = 15<br>$E^A$ = 80 ($E^C$ = 49) Δ = 31<br>$E^A$ = 70 ($E^C$ = 40) Δ = 30<br>$E^A$ = 50 ($E^C$ = 40) Δ = 10 |

| Wirkstoff | Aufwandmenge g a.i. / ha | Herbizide Wirkung 28 DAT gegen Phalaris minor |
|---|---|---|
| A1 | 4<br>1 | 65<br>25 |
| (B4.22) Pyrasulfotole | 5 | 0 |
| A1 + (B4.22) Pyrasulfotole | 4 + 5<br>1 + 5 | $E^A$ = 70 ($E^C$ = 65) Δ = 5<br>$E^A$ = 30 ($E^C$ = 25) Δ = 5 |

| Wirkstoff | Aufwandmenge g a.i. / ha | Herbizide Wirkung 28 DAT gegen Poa annua L. |
|---|---|---|
| A1 | 4 | 70 |
| (B4.22) Pyrasulfotole | 15<br>5 | 0<br>0 |
| A1 + (B4.22) Pyrasulfotole | 4 + 15<br>4 + 5 | $E^A$ = 80 ($E^C$ = 70) Δ = 10<br>$E^A$ = 97 ($E^C$ = 70) Δ = 27 |

| Wirkstoff | Aufwandmenge g a.i. / ha | Herbizide Wirkung 28 DAT gegen Veronica hederifolia |
|---|---|---|
| A1 | 1 | 15 |
| (B4.22) Pyrasulfotole | 45<br>5 | 65<br>10 |
| A1 + (B4.22) Pyrasulfotole | 1 + 45<br>1 + 5 | $E^A$ = 97 ($E^C$ = 70) Δ = 27<br>$E^A$ = 70 ($E^C$ = 24) Δ = 46 |

| Wirkstoff | Aufwandmenge g a.i. / ha | Herbizide Wirkung 28 DAT gegen Alopecurus myosuroides |
|---|---|---|
| A1 | 1 | 15 |
| (B2.68) Thiencarbazone [CAS 317815-83-1] | 1,5 | 40 |
| A1 + (B2.68) Thiencarbazone [CAS 317815-83-1] | 1 + 1,5 | $E^A$ = 65 ($E^C$ = 49) Δ = 16 |

| Wirkstoff | Aufwandmenge g a.i. / ha | Herbizide Wirkung 28 DAT gegen Bromus sterilis |
|---|---|---|
| A1 | 4<br>1 | 60<br>25 |
| (B2.68) Thiencarbazone [CAS 317815-83-1] | 1,5<br>0,5 | 25<br>20 |
| A1 + (B2.68) Thiencarbazone [CAS 317815-83-1] | 4 + 1,5<br>4 + 0,5<br>1 + 0,5 | $E^A$ = 90 ($E^C$ = 70) Δ = 20<br>$E^A$ = 90 ($E^C$ = 68) Δ = 22<br>$E^A$ = 70 ($E^C$ = 40) Δ = 30 |

| Wirkstoff | Aufwandmenge g a.i. / ha | Herbizide Wirkung 28 DAT gegen Centaurea cyanus |
|---|---|---|
| A1 | 4<br>1 | 15<br>0 |
| (B2.68) Thiencarbazone [CAS 317815-83-1] | 0,5<br>1,5<br>0,17 | 10<br>20<br>15 |
| A1 + (B2.68) Thiencarbazone [CAS 317815-83-1] | 4 + 0,5<br>1 + 1,5<br>1 + 0,5<br>1 + 0,17 | $E^A$ = 30 ($E^C$ = 24) Δ = 6<br>$E^A$ = 35 ($E^C$ = 20) Δ = 15<br>$E^A$ = 25 ($E^C$ = 10) Δ = 15<br>$E^A$ = 20 ($E^C$ = 15) Δ = 5 |

| Wirkstoff | Aufwandmenge g a.i. / ha | Herbizide Wirkung 28 DAT gegen Galium aparine |
|---|---|---|
| A1 | 1 | 20 |
| (B2.68) Thiencarbazone [CAS 317815-83-1] | 1,5<br>0,5<br>0,17 | 35<br>0<br>30 |
| A1 + (B2.68) Thiencarbazone [CAS 317815-83-1] | 1 + 1,5<br>1 + 0,5<br>1 + 0,17 | $E^A$ = 75 ($E^C$ = 48) Δ = 27<br>$E^A$ = 25 ($E^C$ = 20) Δ = 5<br>$E^A$ = 50 ($E^C$ = 44) Δ = 6 |

| Wirkstoff | Aufwandmenge g a.i. / ha | Herbizide Wirkung 28 DAT gegen Lolium rigidum (resistenter Biotyp) |
|---|---|---|
| A1 | 16 | 40 |
| (B2.68) Thiencarbazone [CAS 317815-83-1] | 0,17 | 10 |
| A1 + (B2.68) Thiencarbazone [CAS 317815-83-1] | 16 + 0,17 | $E^A$ = 65 ($E^C$ = 46) Δ = 19 |

| Wirkstoff | Aufwandmenge g a.i. / ha | Herbizide Wirkung 28 DAT gegen Matricaria inodora |
|---|---|---|
| A1 | 4 | 40 |
| (B2.68) Thiencarbazone [CAS 317815-83-1] | 0,5 | 30 |
| A1 + (B2.68) Thiencarbazone [CAS 317815-83-1] | 4 + 0,5 | $E^A$ = 80 ($E^C$ = 58) Δ = 22 |

| Wirkstoff | Aufwandmenge g a.i. / ha | Herbizide Wirkung 28 DAT gegen Phalaris minor |
|---|---|---|
| A1 | 4 | 65 |
| (B2.68) Thiencarbazone [CAS 317815-83-1] | 0,5 | 25 |
| A1 + (B2.68) Thiencarbazone [CAS 317815-83-1] | 4 + 0,5 | $E^A$ = 97 ($E^C$ = 74) Δ = 23 |

| Wirkstoff | Aufwandmenge g a.i. / ha | Herbizide Wirkung 28 DAT gegen Poa annua L. |
|---|---|---|
| A1 | 4 | 70 |
| (B2.68) Thiencarbazone [CAS 317815-83-1] | 0,5 | 25 |
| A1 + (B2.68) Thiencarbazone [CAS 317815-83-1] | 4 + 0,5 | $E^A$ = 98 ($E^C$ = 78) Δ = 20 |

| Wirkstoff | Aufwandmenge g a.i. / ha | Herbizide Wirkung 28 DAT gegen Veronica hederifolia |
|---|---|---|
| A1 | 1 | 15 |
| (B2.68) Thiencarbazone [CAS 317815-83-1] | 0,5 | 40 |
| A1 + (B2.68) Thiencarbazone [CAS 317815-83-1] | 1 + 0,5 | $E^A$ = 65 ($E^C$ = 49) Δ = 16 |

| Wirkstoff | Aufwandmenge g a.i. / ha | Herbizide Wirkung 28 DAT gegen Viola tricolor |
|---|---|---|
| A1 | 4<br>1 | 50<br>15 |
| (B2.68) Thiencarbazone [CAS 317815-83-1] | 1,5 | 20 |
| A1 + (B2.68) Thiencarbazone [CAS 317815-83-1] | 4 + 1,5<br>1 + 1,5 | $E^A$ = 95 ($E^C$ = 60) Δ = 35<br>$E^A$ = 80 ($E^C$ = 32) Δ = 48 |

**Patentansprüche**

1. Herbizide Zusammensetzung enthaltend herbizid wirksame Verbindungen (A) und (B), wobei

   (A) für
   A1 steht, oder ein agrochemisch verträgliches Salz dieser Verbindung, wobei die Verbindung A1 wie folgt definiert ist:

   A1 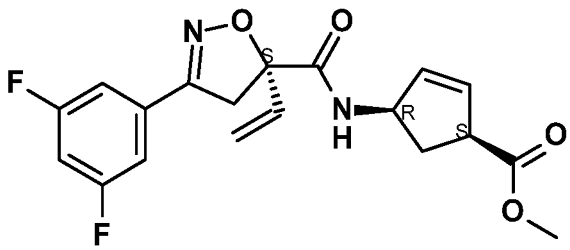

   und
   (B) für
   eine oder mehrere Komponenten (B) ausgewählt aus

   (B2.18) Diflufenican,
   (B2.28) Flufenacet,
   (B2.31) Foramsulfuron,
   (B2.37) Mesosulfuron,
   (B2.58) Propyzamide,
   (B2.68) Thiencarbazone,
   (B3.1) Bromoxynil,
   (B4.22) Pyrasulfotole,
   (B5.31) Halauxifen,
   (B7.4) Glufosinate,
   (B7.5) Glyphosate,
   (B11.6) Indaziflam.

   steht.

2. Herbizide Zusammensetzung gemäß Anspruch 1, wobei die Wirkstoffkomponenten (A) und (B) in einem Gewichtsverhältnis von 1:100000 bis 2000:1 enthalten sind.

3. Herbizide Zusammensetzung gemäß Anspruch 1, wobei die Wirkstoffkomponenten (A) und (B) in einem Gewichtsverhältnis von 1:15000 bis 500:1 enthalten sind.

4. Herbizide Zusammensetzung gemäß einem der Ansprüche 1 bis 3, wobei ein oder mehrere weitere Komponenten aus der Gruppe enthaltend Pflanzenschutzmittelwirkstoffe anderer Art enthalten sind.

5. Herbizides Mittel enthaltend eine herbizide Zusammensetzung gemäß einem der Ansprüche 1 bis 4 und einen oder mehrere im Pflanzenschutz übliche Zusatzstoffe.

6. Verfahren zur Bekämpfung von Schadpflanzen oder zur Wachstumsregulierung von Pflanzen, wobei die Wirkstoffkomponenten der herbiziden Zusammensetzung gemäß einem der Ansprüche 1 bis 4 oder des herbiziden Mittels gemäß dem Anspruch 5 auf die Pflanzen, Pflanzenteile, Pflanzensamen oder die Anbaufläche appliziert werden.

7. Verfahren gemäß Anspruch 6, wobei die Wirkstoffkomponenten der herbiziden Zusammensetzung oder des herbiziden Mittels gemäß einem der Ansprüche 1 bis 5 gemeinsam oder getrennt im Vorauflauf, Nachauflauf oder im Vor- und Nachauflauf auf die Pflanzen, Pflanzenteile, Pflanzensamen oder die Anbaufläche appliziert werden.

8. Verfahren gemäß Anspruch 6 oder 7, wobei die Herbizidkomponente (A) in einer Aufwandmenge von 0,01 bis 1000 g a.i./ha appliziert wird.

9. Verfahren gemäß Anspruch 6 oder 7, wobei die Herbizidkomponente (B) in einer Aufwandmenge von 0,01 bis 4000 g a.i./ha appliziert wird, ausgenommen Pelargonsäure, die in einer Aufwandmenge von 1 bis 100.000 g a.i./ha appliziert wird.

10. Verfahren nach einem der Ansprüche 6 bis 9 zur Bekämpfung von Schadpflanzen durch Behandlung vor Aussaat der Kulturpflanzen und in Plantagenkulturen, sowie Nichtkulturland.

11. Verfahren nach einem der Ansprüche 6 bis 10, wobei die Wirkstoffe der herbizide Zusammensetzung in Form eines herbiziden Mittels gemäß Anspruch 12, welches ein oder mehrere im Pflanzenschutz übliche Zusatzstoffe enthält, gegebenenfalls nach Verdünnen mit Wasser, appliziert werden.

12. Verwendung der herbiziden Zusammensetzung gemäß einem der Ansprüche 1 bis 4 oder des herbiziden Mittels gemäß dem Anspruch 5 zur Bekämpfung von Schadpflanzen oder zur Wachstumsregulierung von Pflanzen.

**Claims**

1. Herbicidal composition comprising herbicidally active compounds (A) and (B), wherein (A) is

A1, or an agrochemically acceptable salt of that compound, where compound A1 is defined as follows:

A1

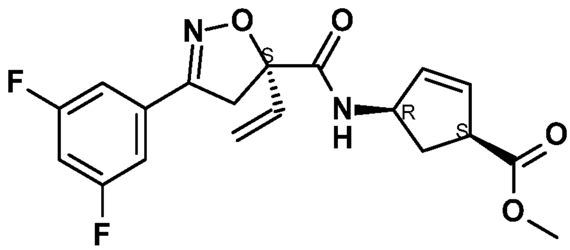

and
(B) is
one or more components (B) selected from

(B2.18) diflufenican,
(B2.28) flufenacet,
(B2.31) foramsulfuron,
(B2.37) mesosulfuron,
(B2.58) propyzamide,
(B2.68) thiencarbazone,
(B3.1) bromoxynil,
(B4.22) pyrasulfotole,
(B5.31) halauxifen,
(B7.4) glufosinate,
(B7.5) glyphosate,
(B11.6) indaziflam.

2. Herbicidal composition according to Claim 1, comprising active ingredient components (A) and (B) in a weight ratio of 1:100 000 to 2000:1.

3. Herbicidal composition according to Claim 1, comprising active ingredient components (A) and (B) in a weight ratio of 1:15 000 to 500:1.

4. Herbicidal composition according to any of Claims 1 to 3, comprising one or more further components from the group comprising other kinds of active crop protection ingredients.

5. Herbicidal product comprising a herbicidal composition according to any of Claims 1 to 4 and one or more additives customary in crop protection.

6. Method of controlling harmful plants or for regulating the growth of plants, wherein the active ingredient components of the herbicidal composition according to any of Claims 1 to 4 or of the herbicidal product according to Claim 5 are applied to the plants, plant parts, plant seeds or the area under cultivation.

7. Method according to Claim 6, wherein the active ingredient components of the herbicidal composition or herbicidal product according to any of Claims 1 to 5 are applied to the plants, plant parts, plant seeds or the area under cultivation jointly or separately by the pre-emergence method, the post-emergence method or by the pre- and post-emergence method.

8. Method according to Claim 6 or 7, wherein the herbicide component (A) is applied at an application rate of 0.01 to 1000 g a.i./ha.

9. Method according to Claim 6 or 7, wherein the herbicide component (B) is applied at an application rate of 0.01 to 4000 g a.i./ha, except for pelargonic acid, which is applied at an application rate of 1 to 100 000 g a.i./ha.

10. Method according to any of Claims 6 to 9 for controlling harmful plants by treatment before sowing of the crop plants and in plantation crops, and on uncultivated land.

11. Method according to any of Claims 6 to 10, wherein the active ingredients of the herbicidal composition are applied in the form of a herbicidal product according to Claim 12 comprising one or more additives customary in crop protection, optionally after dilution with water.

12. Use of the herbicidal composition according to any of Claims 1 to 4 or of the herbicidal product according to Claim 5 for controlling harmful plants or for regulating the growth of plants.

**Revendications**

1. Composition herbicide contenant des composés à activité herbicide (A) et (B), où (A) représente

A1 ou un sel agrochimiquement acceptable de ce composé, le composé A1 étant défini comme suit :

A1 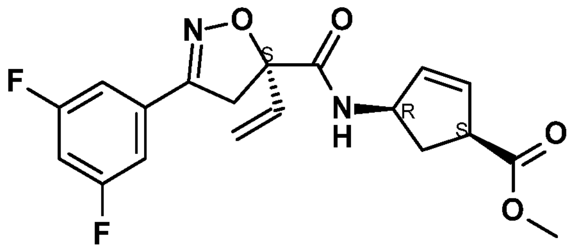

et
(B) représente
un ou plusieurs composants (B) choisi parmi

(B2.18) le diflufénican,
(B2.28) le flufénacet,
(B2.31) le foramsulfuron,
(B2.37) le mésosulfuron,
(B2.58) le propyzamide,
(B2.68) la thiencarbazone,
(B3.1) le bromoxynil,
(B4.22) le pyrasulfotole,
(B5.31) l'halauxifène,
(B7.4) le glufosinate,
(B7.5) le glyphosate,
(B11.6) l'indaziflame

**2.** Composition herbicide selon la revendication 1, dans laquelle les composants actifs (A) et (B) sont contenus en un rapport en poids de 1:100 000 à 2 000:1.

**3.** Composition herbicide selon la revendication 1, dans laquelle les composants actifs (A) et (B) sont contenus en un rapport en poids de 1:15 000 à 500:1.

**4.** Composition herbicide selon l'une quelconque des revendications 1 à 3, dans laquelle sont contenus un ou plusieurs composants supplémentaires choisis dans le groupe contenant des substance actives de produits phytosanitaires d'autre type.

**5.** Produit herbicide contenant une composition herbicide selon l'une quelconque des revendications 1 à 4 et un ou plusieurs additifs usuels dans la protection des plantes.

**6.** Procédé pour la lutte contre des plantes nuisibles ou pour la régulation de la croissance de plantes, dans lequel les composants actifs de la composition herbicide selon l'une quelconque des revendications 1 à 4 ou du produit herbicide selon la revendication 5 sont appliqués sur les plantes, parties de plantes, semences de plantes ou la surface cultivée.

**7.** Procédé selon la revendication 6, dans lequel les composants actifs de la composition herbicide ou du produit herbicide selon l'une quelconque des revendications 1 à 5 sont appliqués ensemble ou séparément en prélevée, post-levée ou en pré- et post-levée sur les plantes, parties de plantes, semences de plantes ou la surface cultivée.

**8.** Procédé selon la revendication 6 ou 7, dans lequel le composant herbicide (A) est appliqué en une quantité utilisée de 0,01 à 1 000 g a.i./ha.

**9.** Procédé selon la revendication 6 ou 7, dans lequel le composant herbicide (B) est appliqué en une quantité utilisée de 0,01 à 4 000 g a.i./ha, hormis l'acide pélargonique qui est appliqué en une quantité utilisée de 1 à 100 000 g a.i./ha.

**10.** Procédé selon l'une quelconque des revendications 6 à 9, pour la lutte contre des plantes nuisibles par traitement avant semis des plantes cultivées et dans des cultures de plantation, ainsi que sur des terres non cultivées.

**11.** Procédé selon l'une quelconque des revendications 6 à 10, dans lequel les substances actives de la composition herbicide sont appliquées sous forme d'un produit herbicide selon la revendication 12, qui contient un ou plusieurs additifs usuels dans la protection des plantes, éventuellement après dilution avec de l'eau.

**12.** Utilisation de la composition herbicide selon l'une quelconque des revendications 1 à 4 ou du produit herbicide selon la revendication 5 pour la lutte contre des plantes nuisibles ou pour la régulation de la croissance de plantes.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2012130798 A1
- WO 2019034602 A1
- WO 2019145245 A1
- WO 2006043635 A
- WO 2003106457 A
- WO 2006003494 A
- WO 2010052161 A
- EP 2647626 A
- WO 2004099160 A
- JP 2010018586 A
- WO 2013144213 A
- WO 2010051926 A
- CN 103232431
- WO 2013050317 A1
- WO 2013162715 A2
- WO 2013162716 A2
- US 20140213448 A1
- CN 101337937 A
- CN 103109816 A
- WO 2012034403 A1
- WO 2011085575 A1
- CN 101337940 A
- CN 101715774 A
- CN 103524422 A
- CN 102391261 A
- US 20140275503 A1
- WO 2007040280 A1
- WO 2007040282 A1
- WO 2015058021 A1
- WO 2015058028 A1
- CN 103265527 A
- WO 2013115391 A1
- WO 2014187846 A1
- WO 2010066780 A1
- WO 2011151146 A1
- WO 2011067272 A
- WO 2013050302 A
- EP 0221044 A
- EP 0131624 A
- WO 9211376 A
- WO 9214827 A
- WO 9119806 A
- EP 0257993 A
- US 5013659 A
- EP 0142924 A
- EP 0193259 A
- WO 9113972 A
- EP A0464461 A


### In der Beschreibung aufgeführte Nicht-Patentliteratur


- *Weed Research,* 1986, vol. 26, 441-445
- The Pesticide Manual. The British Crop Protection Council and the Royal Soc. of Chemistry, 2006
- *CHEMICAL ABSTRACTS,* 885026-50-6
- *CHEMICAL ABSTRACTS,* 637360-23-7
- *CHEMICAL ABSTRACTS,* 872999-66-1
- *CHEMICAL ABSTRACTS,* 1225292-17-0
- *CHEMICAL ABSTRACTS,* 1440516-42-6
- *CHEMICAL ABSTRACTS,* 792914-58-0
- *CHEMICAL ABSTRACTS,* 1204776-60-2
- *CHEMICAL ABSTRACTS,* 1461743-15-6
- *CHEMICAL ABSTRACTS,* 1226889-14-0
- *CHEMICAL ABSTRACTS,* 1449220-44-3
- *CHEMICAL ABSTRACTS,* 1332628-83-7
- *CHEMICAL ABSTRACTS,* 1477923-37-7
- *CHEMICAL ABSTRACTS,* 1105672-77-2
- *CHEMICAL ABSTRACTS,* 1232543-85-9
- *CHEMICAL ABSTRACTS,* 1268277-22-0
- *CHEMICAL ABSTRACTS,* 1233882-22-8
- *CHEMICAL ABSTRACTS,* 1108184-52-6
- *CHEMICAL ABSTRACTS,* 1542271-46-4
- *CHEMICAL ABSTRACTS,* 1370358-69-2
- *CHEMICAL ABSTRACTS,* 1181213-14-8
- *CHEMICAL ABSTRACTS,* 1253850-56-4
- *CHEMICAL ABSTRACTS,* 933798-27-7
- *CHEMICAL ABSTRACTS,* 934001-66-8
- *CHEMICAL ABSTRACTS,* 1477919-27-9
- *CHEMICAL ABSTRACTS,* 1452877-50-7
- *CHEMICAL ABSTRACTS,* 1449021-97-9
- *CHEMICAL ABSTRACTS,* 1638765-58-8
- *CHEMICAL ABSTRACTS,* 1229023-00-0
- *CHEMICAL ABSTRACTS,* 1309959-62-3
- Calculating Synergistic and Antagonistic Responses of Herbicide Combination. *Weeds,* 1967, vol. 15, 20-22
- Gene Transfer to Plants, Springer Lab Manual. Springer, 1995
- **CHRISTOU.** Trends in Plant Science. 1996, vol. 1, 423-431
- **B. SAMBROOK et al.** Molecular Cloning, A Laboratory Manual. Cold Spring Harbor Laboratory Press, 1989

- **WINNACKER.** Gene und Klone. VCH Weinheim, 1996
- **BRAUN et al.** *EMBO J.,* 1992, vol. 11, 3219-3227
- **WOLTER et al.** *Proc. Natl. Acad. Sci. USA,* 1988, vol. 85, 846-850
- **SONNEWALD et al.** *Plant J.,* 1991, vol. 1, 95-106
- **WINNACKER-KÜCHLER.** Chemische Technologie. C. Hanser Verlag, 1986, vol. 7
- **VAN VALKENBURG.** Pesticides Formulations. Marcel Dekker, 1973
- **K. MARTENS.** Spray Drying Handbook. G. Goodwin Ltd, 1979
- **WATKINS.** Handbook of Insecticide Dust Diluents and Carriers
- **OLPHEN.** Introduction to Clay Colloid Chemistry. J. Wiley & Sons
- **MARSDEN.** Solvents Guide. Interscience, 1963
- **MCCUTCHEON'S.** Detergents and Emulsifiers Annual. MC Publ. Corp,
- **SISLEY ; WOOD.** Encyclopedia of Surface Active Egents. Chem. Publ. Co. Inc, 1964
- **SCHÖNFELDT.** Grenzflächenaktive Äthylenoxidaddukte. Wiss. Verlagsgesellschaft, 1976
- **WINNACKER-KÜCHLER.** Chemische Technologie. Hanser Verlag, 1986
- **S. R. COLBY.** *Weeds,* 1967, vol. 15, 20-22
- *CHEMICAL ABSTRACTS,* 77182-82-2
- *CHEMICAL ABSTRACTS,* 38641-94-0
- *CHEMICAL ABSTRACTS,* 317815-83-1